# EUROPEAN PATENT SPECIFICATION

(11) **EP 1 946 932 B1**
(45) Date of publication and mention of the grant of the patent: **10.10.2012**
(21) Application number: 06822593.7
(22) Date of filing: 30.10.2006
(51) Int. Cl.: B41J 2/36, B41J 2/52, H04N 1/405, H04N 1/52

(54) **THERMAL RECORDING DEVICE, IMAGE FORMING METHOD, AND PRINTED OBJECT**
THERMISCHE AUFZEICHNUNGSVORRICHTUNG, ABBILDUNGSVERFAHREN UND DRUCKOBJEKT
DISPOSITIF D IMPRESSION THERMIQUE, PROCEDE DE FORMATION D IMAGE ET OBJET IMPRIME

(30) Priority: 02.11.2005 JP 2005319583; 02.11.2005 JP 2005319572; 27.02.2006 JP 2006050200; 30.03.2006 JP 2006094126
(43) Date of publication of application: 23.07.2008
(73) Proprietor: DAI NIPPON PRINTING CO., LTD., Tokyo-to 162-8001 (JP)
(72) Inventor: TAKITA, Hiroaki, Tokyo 162-8001 (JP); TAMURA, Yoshihiko, Tokyo 162-8001 (JP); OHKUBO, Takayuki, Tokyo 162-8001 (JP)
(74) Representative: Strehl Schübel-Hopf & Partner
(86) International application number: PCT/JP2006/321636
(87) International publication number: WO 2007/052595

(56) References cited:
- EP-A- 0 940 972
- EP-A- 1 980 404
- JP-A- 05 284 376
- JP-A- 07 076 137
- JP-A- 07 125 311
- JP-A- 10 075 376
- JP-A- 62 045 282
- JP-A- 2000 101 856
- JP-A- 2000 135 810
- US-A- 5 341 228
- US-A- 5 519 426
- US-A- 5 963 714

## Description

### TECHNICAL FIELD

The present invention relates to a thermal recording apparatus, etc., which provide smooth halftone images without being influenced by heat accumulated in a thermal head.

### BACKGROUND ART

A thermal printer is an apparatus which heats the back of an ink ribbon superposed on a recording paper by means of a thermal head in order to thermally transfer the ink of the ink ribbon onto the recording paper, to thereby print an image on the paper. The ink ribbon is a thermal transfer sheet including a layer of thermally meltable color ink, and the recording paper is an image-receiving sheet such as a sheet of paper or a plastic sheet.

The thermal head is composed of a plurality of heat-generating resistors formed on a substrate in a row. The thermal printer includes a plurality of ink ribbons corresponding to a plurality of colors. The inks of the ink ribbons of the plurality of colors are transferred in a superposed state onto the recording paper at the same position, to thereby perform color printing. For example, the plurality of ink ribbons are disposed to be rotatable, and an ink ribbon to undergo thermal transfer is moved to the position of the thermal head. Further, a recording-paper feed apparatus feeds the recording paper to the position of the thermal head, which is a printing position, whereby printing is effected in a predetermined image-printing area of the recording paper.

Such a thermal head can control the amount of applied heat stepwise. However, when it melts and transfers a color material, it is susceptible to the density of dots as well as to adjacent dots, and encounters difficulty in controlling gradation on a pixel-by-pixel basis. Therefore, the melting and transfer of the color material is controlled by use of two values; i.e., a value representing "to be transferred" after melting and a value representing "not to be transferred." In such a case, dots of a certain size are drawn, whereby a gradation is expressed through area modulation. For example, there are used a halftone generation method in which a rational tangent matrix is used, and a super-cell-scheme halftone generation method which is based on the former method and in which a plurality of matrices are used in order to virtually increase the number of gradation levels.

In a known method, an image signal is processed by means of a correction circuit for image-signal processing which includes a gradation correction table, the processed image signal and an image signal from an external apparatus are selectively output through switching, and the output image signal is subjected to gradation processing to be output. In another known method, input image data are spatially divided into matrices, and gradation conversion is performed on the basis of a growth-start gradation value of each pixel determined in accordance with the priority order sequentially determined from a pixel located at the center of each matrix toward pixels located at the outer edge of the matrix (see, for example, Patent Document 1 and Patent Document 2).

Patent Document 1: Japanese Patent Application Laid-Open (*kokai*) No. H11-177826
Patent Document 2: Japanese Patent Application Laid-Open (*kokai*) No. 2006-279596

US-A-5 519 426 discloses a conventional method for increasing the output resolution of a thermal printer by using an overdrive energy to control a relative position of a binary edge of a pixel image at a resolution that is less than the native resolution of the thermal printer.

Other conventional devices and methods for halftone printing are disclosed in US-A-5 963 714 and US-A-5 341 228.

### DISCLOSURE OF THE INVENTION

### PROBLEMS TO BE SOLVED BY THE INVENTION

An increased resolution of a thermal head improves the resolution of images. However, in such a case, the influence of heat accumulation of the thermal head increases, with the result that dots are connected irregularly and blurred, and thus a resultant image provides a sensation of roughness. Therefore, it has been impossible to obtain smooth halftone images.

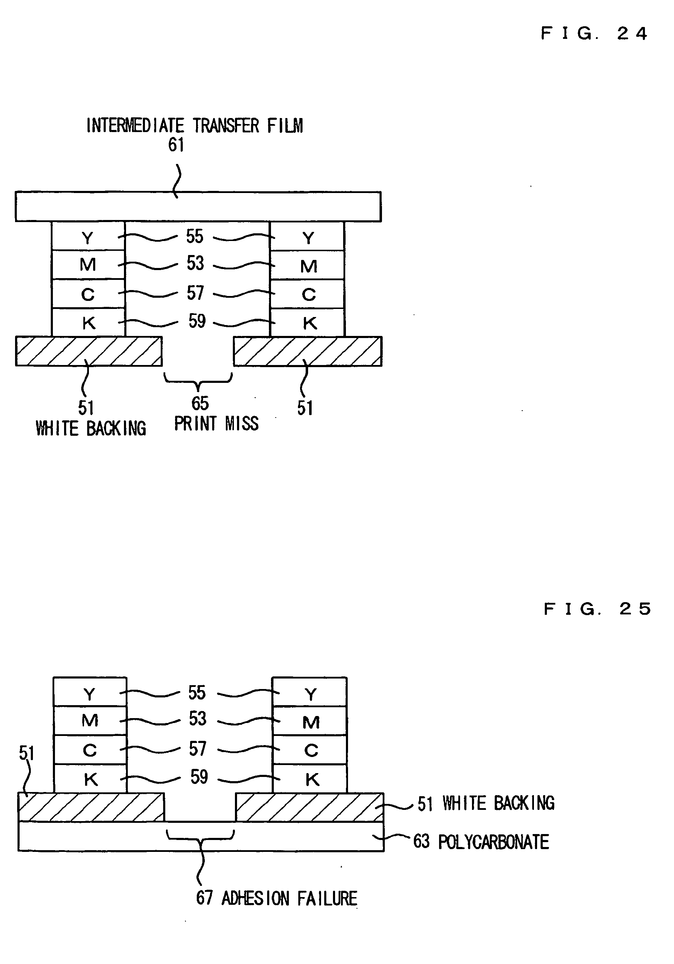

Further, in a case where images of yellow Y, magenta M, cyan C, and black K are printed on an intermediate transfer film 61 in accordance with a dot-on-dot scheme and a white backing 51 is applied as shown in FIG. 24 and these images are transferred from the intermediate transfer film 61 to a polycarbonate sheet 63 as shown in FIG. 25, large steps are formed because of the overprinting, so that printing miss 65 of the white backing 51 occurs, and an adhesion failure 67 occurs.

Moreover, the above-described method has a problem in that when images of different colors are printed in a superposed state, the dot image of a color to be superposed on the underlying dot image cannot be printed stably. This problem becomes remarkable at a highlight portion where the gradation value is low, resulting in a decrease in printing quality and provision of roughness sensation. Therefore, it has been impossible to obtain smooth halftone images.

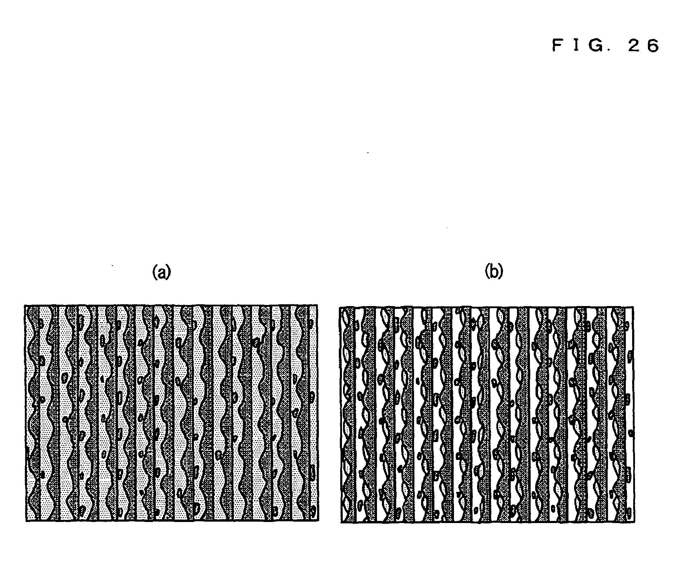

That is, as shown in FIGS. 26(a) and 26(b), printing stability lowers at a portion where overprinting is performed, and the dot image of a color to be superposed is not properly formed, so that printing quality lowers.
FIG. 26(a) shows an example printed image (monochrome in the drawing) for a case where an image of magenta (M) is overprinted on an image of cyan (C). Vertical wavy dark portions are the image of cyan (C), and dotted portions present at light (highlight) portions of the cyan (C) image are the image of magenta (M). It can be seen from this drawing that when an image of magenta (M) is overprinted on highlight portions of an image of cyan (C), ink which forms the image of magenta (M) encounters difficulty in adhering, so that nonuniformity arises.

Further, FIG. 26(b) shows an example printed image (monochrome in the drawing) for a case where images of cyan (C), magenta (M), and yellow (Y) are successively overprinted. The images of magenta (M) and yellow (Y) are overprinted on highlight portions of the image of cyan (C). In this case, inks which form the images of magenta (M) and yellow (Y) encounter difficulty in adhering, so that nonuniformity arises.

The present invention has been accomplished in view of such problems, and an object of the present invention is to provide a thermal recording apparatus, etc., which provide smooth halftone images without being influenced by heat accumulated in a thermal head, which mitigate printing miss of a white backing and adhesion failure, which would occur when a white backing is applied or transfer to a polycarbonate sheet or the like is performed, and which allow obtainment of halftone images which do not have nonuniformity associated with overprinting at highlight portions.
It is an object of the present invention to overcome the above mentioned problem and provide a more precise thermal recording apparatus and method.

### MEANS FOR SOLVING THE PROBLEMS

The above-described object is met by the thermal recording apparatus defined in claim 1 and the method defined in claim 11. A thermal head, of an illustrative example comprises: pre-processing means for performing resolution conversion, gradation conversion, and color separation to cyan, magenta, yellow, and black for first image data to thereby produce second image data; shift means for shifting the second image data by a predetermined number of pixels to thereby produce third image data and fourth image data; dot conversion means for performing dot conversion for the third image data and the fourth image data to thereby produce fifth image data and sixth image data; reverse shift means for reversely shifting the sixth image data to thereby produce seventh image data; and printing means for printing the fifth image data and the seventh image data in a superposed state to obtain a printed object.

The respective color data of the fifth image data and the seventh image data are printed by means of double-tone printing. Thus, a smooth halftone image can be obtained.
The thermal recording apparatus performs resolution conversion, gradation conversion, and color separation for the first image data to thereby produce the second image data composed of image data of four colors; i.e., cyan (C), magenta (M), yellow (Y), and black (K), and performs shift processing, dot conversion processing, and reverse shift processing for the second image data. Therefore, each of the third image data, the fourth image data, the fifth image data, the sixth image data, and the seventh image data include image data for each of cyan (C), magenta (M), yellow (Y), and black (K), which are obtained through the color separation.

The shift means shifts the second image data by a predetermined number of pixels for double-tone printing, to thereby produce the fourth image data.
Meanwhile, the third image data may be the same as the second image data, or may be produced by shifting the second image data by a predetermined number of pixels set for each color.

Further, the shift means may be configured not to shift the second image data for at least one color. In this case, for a certain color, only the third image data contain corresponding data, and for the remaining colors, both the third image data and the fourth image data contain corresponding data. The data of the certain color are printed in single tone, and the data of the remaining colors are printed in double tone, whereby the number of times of overprinting can be reduced.
Preferably, the at least one color for which the shift processing is not performed is black (K) or/and yellow (Y).

The above-described thermal recording apparatus may further comprise: dot-on-dot processing means for performing, for at least one type of color image data of the second image data to be printed second or later, the same shift processing as that performed for another type of color image data to be printed before the at least one type of color image data, to thereby produce eighth image data and ninth image data; means for performing dot conversion processing and reverse shift processing for the eighth image data and the ninth image data to thereby produce tenth image data and eleventh image data; highlight region extraction means for extracting a highlight region of the first image data; and combining means for combining the image data, wherein the combining means applies the ninth image data and the tenth image data to respective portions of at least one type of color image data of the fifth image data and the seventh image data to be printed second or later, the portions corresponding to a region recognized by the highlight region extraction means as a highlight portion.

When the printing is performed in the sequence of cyan (C), magenta (M), yellow (Y), and black (K), the dot-on-dot processing is performed such that at least the color image data of magenta (M) to be printed second or later undergo the same shift processing as that for the color image data of cyan (C) to be printed before the color image data of magenta (M).

The highlight region extraction means extracts, as a highlight region, a region whose gradation value is lower than a predetermined value. Preferably, the highlight region is a region where the gradation value of the color image data of magenta (M) is 40% or less.
Further, the highlight region extraction means may extract, as a highlight region, a region where the gradation value of first color image data to be printed second or later is lower than a predetermined value, and the gradation value of second color image data to be printed before the first color image data is higher than a predetermined value. In this case, preferably, the highlight region is a region where the gradation value of the color image data of magenta (M) is 40% or less, and the gradation value of the color image data of cyan (C) is 40% or greater.

An image forming method according to another illustrative example comprises the steps of: performing resolution conversion, gradation conversion, and color separation to cyan, magenta, yellow, and black for first image data to thereby produce second image data; shifting the second image data by a predetermined number of pixels to thereby produce third image data and fourth image data; performing dot conversion for the third image data and the fourth image data to thereby produce fifth image data and sixth image data; reversely shifting the sixth image data to thereby produce seventh image data; and printing the fifth image data and the seventh image data in a superposed state to obtain a printed object.

Disclosed is also a printed object obtained by performing resolution conversion, gradation conversion, and color separation to cyan, magenta, yellow, and black for first image data to thereby produce second image data; shifting the second image data by a predetermined number of pixels to thereby produce third image data and fourth image data; performing dot conversion for the third image data and the fourth image data to thereby produce fifth image data and sixth image data; reversely shifting the sixth image data to thereby produce seventh image data; and printing the fifth image data and the seventh image data in a superposed state.

### EFFECTS of THE INVENTION

According to the present invention, it is possible to provide a thermal recording apparatus, etc., which provide smooth halftone images without being influenced by heat accumulated in a thermal head, which mitigate printing miss of a white backing and adhesion failure, which would occur when a white backing is applied or transfer to a polycarbonate sheet or the like is performed, and which allow obtainment of halftone images which do not have nonuniformity associated with overprinting at highlight portions.

### BRIEF DESCRIPTION OF THE DRAWINGS

[FIG. 1] Diagram showing the configuration of a thermal printer 1.
[FIG. 2] Diagram showing the relation between the configuration of the thermal printer 1 and the details of processing.
[FIG. 3] Diagram showing the details of a storage section 7 of the thermal printer 1.
[FIG. 4] Flowchart showing the processing flow of image processing 23 according to a first embodiment.
[FIG. 5] Table showing example parameters for gradation conversion and shift processing.
[FIG. 6] Illustration showing image data produced by the image processing 23.
[FIG. 7] Illustration showing a shift in the lateral direction.
[FIG. 8] Illustration showing a shift in the downward direction.
[FIG. 9] Illustration showing an example output image for the case where the number of lines of the thermal printer 1 is 90 lpi.
[FIG. 10] Illustration showing an example output image for the case where the number of lines of the thermal printer 1 is 75 lpi.
[FIG. 11] Illustration showing an example output image for the case where the number of lines of the thermal printer 1 is 100 lpi.
[FIG. 12] Table showing example parameters used for color-by-color shift processing in a second embodiment.
[FIG. 13] Table showing example parameters used for shift processing for double-tone printing in the second embodiment.
[FIG. 14] Illustration showing an example in which overprinting was performed while dot position was shifted for each color, and a white backing was provided.
[FIG. 15] Illustration showing an example in which overprinting was performed while dot position was shifted for each color, and a resultant image was transferred to a polycarbonate sheet.
[FIG. 16] Flowchart showing the processing flow of image processing 23 according to a third embodiment.
[FIG. 17] Diagram showing the details of a storage section 7 of a thermal printer 1 according to a fourth embodiment.
[FIG. 18] Flowchart showing the processing flow of image processing 23 according to the forth embodiment.
[FIG. 19] Diagram showing the relation among image data.
[FIG. 20] Table showing example parameters used for gradation conversion, dot processing, and shift processing.
[FIG. 21] Explanatory view showing shift processing.
[FIG. 22] Explanatory view showing combining of data in a highlight region.
[FIG. 23] Illustrations showing the result of printing according to the fourth embodiment.
[FIG. 24] Illustration showing an example in which overprinting was performed by a conventional method, and a white backing was provided.
[FIG. 25] Illustration showing an example in which overprinting was performed by the conventional method, and a resultant image was transferred to a polycarbonate sheet.
[FIG. 26] Illustrations showing example images printed by the conventional method.

### DESCRIPTION OF REFERENCE NUMERALS

- 1: thermal printer (thermal recording apparatus)
- 3: image data
- 5: image input section
- 7: storage section
- 9: control section
- 11: printing section
- 13: bus
- 15: output images
- 21: image reading
- 23: image processing
- 25: image printing
- 27: image memory
- 29 .: processing parameter

### BEST MODE FOR CARRYING OUT THE INVENTION

A first preferred embodiment of a thermal recording apparatus, etc. according to the present invention will next be described in detail with reference to the attached drawings.

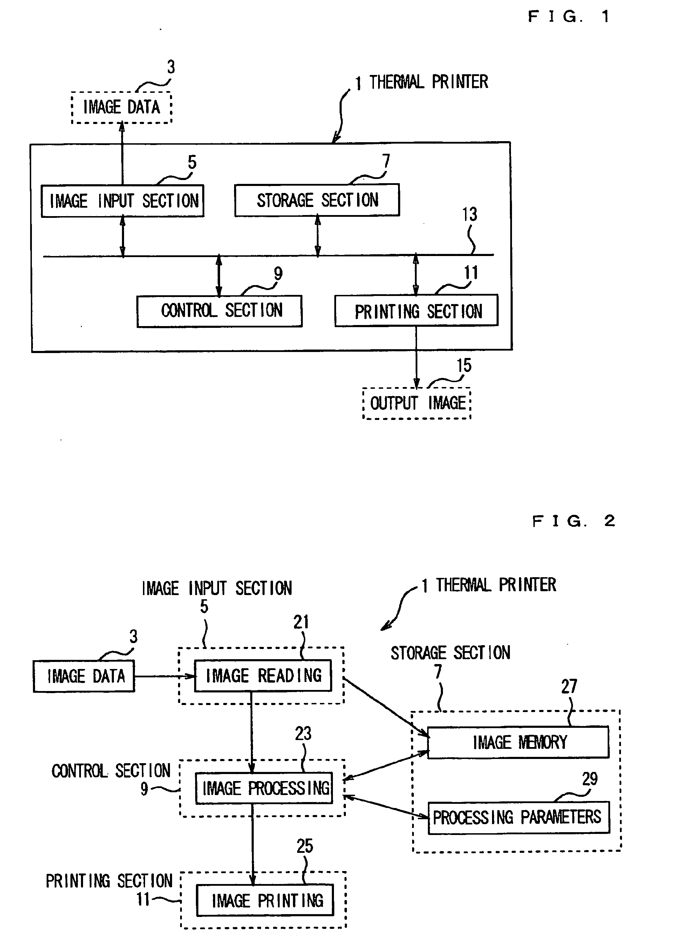

First, the configuration of the thermal recording apparatus (thermal printer 1) of the embodiment of the present invention will be described with reference to FIG. 1.
FIG. 1 is a diagram showing the configuration of the thermal printer 1.

As shown in FIG. 1, the thermal printer 1 is an apparatus which heats the back of an ink ribbon (not shown) superposed on a recording paper (not shown) by means of a thermal head (not shown) in order to thermally transfer the ink of the ink ribbon onto the recording paper, to thereby print an image on the paper. The thermal printer 1 includes an image input section 5, a storage section 7, a control section 9, a printing section 11, etc. which are connected together via a bus 13.

Image data 3 to be printed are input to the image input section 5. The storage section 7 stores the input image data 3, data to be temporarily stored in the course of calculation, processed image data, parameters for image processing, etc. The control section 9 is composed of a CPU (central processing unit) which executes programs, and memory such as ROM (read only memory), RAM (random access memory), etc. for storing program instruction, data, etc. The control section 9 instructs the image input section 5 to read the image data 3 or process the image data 3, sends processed image data to the printing section 11, and instructs the printing section 11 to print the image data.

Although not illustrated, the printing section 11 is composed of a thermal head including a plurality of heat-generating resistors formed in a row on a substrate; a thermal head drive section; etc. Upon receipt of image data to be printed and an instruction from the control section 9, the printing section 11 applies to the thermal head energy corresponding to each pixel value. Thus, ink at the energy-applied portion melts and adheres to recording paper, whereby an output image 15 is output. The greater the pixel value, the greater the image recording density; and the smaller the pixel value, the lower the image recording density.
Notably, the printing section 11 includes four types of ink ribbons of cyan C, magenta M, yellow Y, and black K. The inks of these colors are transferred in a superposed state so as to perform color printing.

FIG. 2 is a diagram showing the relation between the configuration of the thermal printer 1 of FIG. 1 and the details of processing. The image input section 5 performs image reading 21 so as to read the image data 3. The image input section 5 stores the read image data into image memory 27 of the storage section 7, and simultaneously sends the image data to the control section 9. The control section 9 performs image processing 23 on the image data 3.

The image processing 23 includes various types of processing such as resolution conversion processing, gradation conversion processing, CMYK separation processing, image shift processing, dot processing, and image reverse shift processing. The control section performs image processing for the image data stored in the image memory 27 of the storage section 7 while using respective processing parameters stored in a processing parameter memory 29 to thereby obtain final image data. Image data produced in the course of the processing are stored in the image memory 27 of the storage section 7. The control section 9 sends the finally obtained image data to the printing section 11, which performs image printing 25.

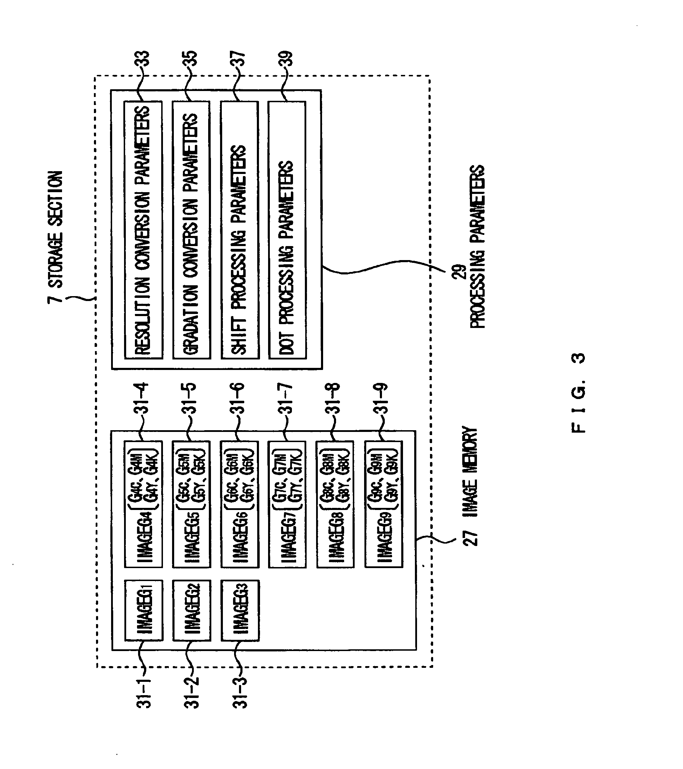

FIG. 3 is a diagram showing the details of the storage section 7 of the thermal printer 1. The storage section 7 is composed of the image memory 27 for storing image data to undergo image processing, and the processing parameter memory 29 for storing parameters used when the image processing is performed. Further, although not illustrated, the storage section 7 further stores a control program, and control parameters of the printing section 11 such as the thermal head.

The image data 3 of R (red), G (green), B (blue), which represent the original image acquired by the thermal printer 1, are registered in the image memory 23, as an image G₁ 31-1. Images G₂ 31-2, G₃ 31-3, G₄ 31-4, G₅ 31-5, G₆ 31-6, G₇ 31-7, G₈ 31-8, and G₉ 31-9 are registered as image data calculated in the course of the image processing 23.

Notably, image data calculated in the course of calculation, excluding the image G₁ 31-1, which is the original image, and the images G₇ 31-7 and G₉ 31-9, which serve as final image data, are not required to be left in the image memory 27.
The images G₄ 31-4, G₅ 31-5, G₆ 31-6, G₇ 31-7, G₈ 31-8, and G₉ 31-9 are image data obtained through processing performed after conversion of the image G₃ 31-3 to CMYK data (CMYK separation), and each is composed of four image data sets of cyan, magenta, yellow, and black.

The processing parameter memory 29 of the storage section 7 stores resolution conversion parameters 33, gradation conversion parameters 35, shift processing parameters 37, and dot processing parameters 39, which are used in the image processing 23.

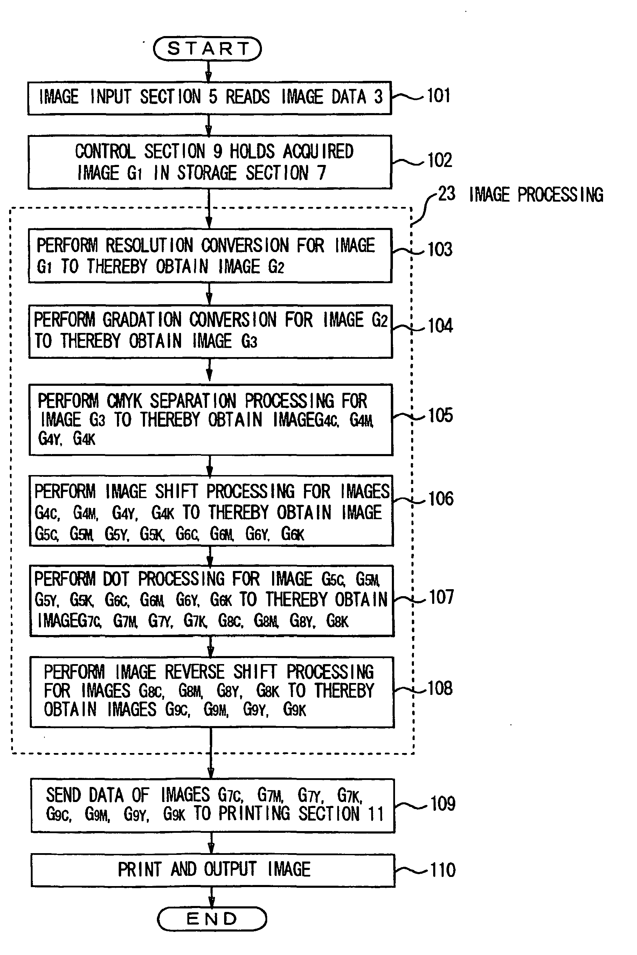

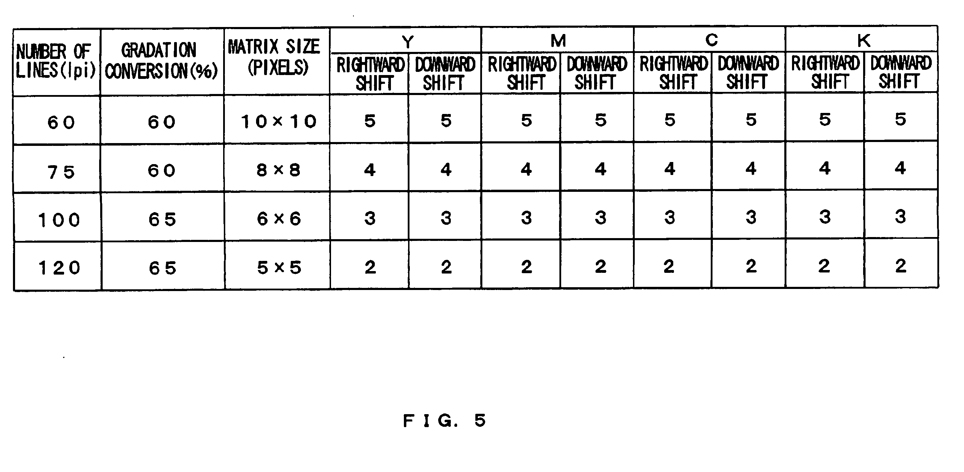

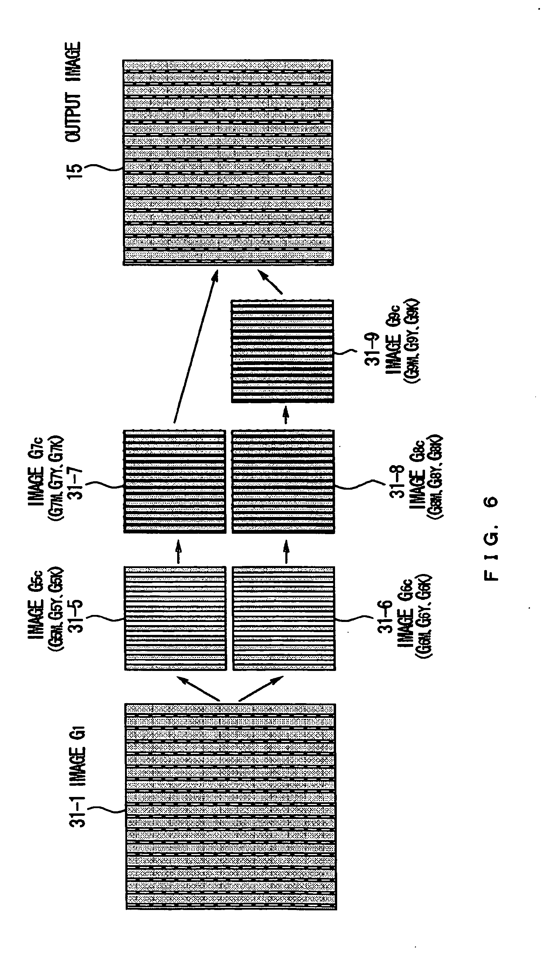

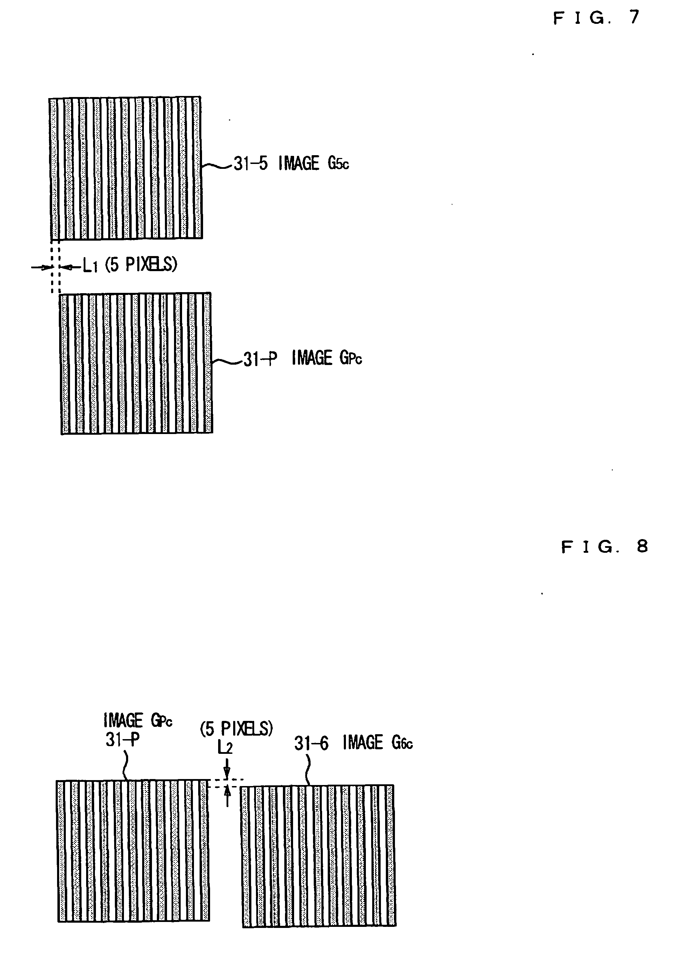

Next, the flow of image processing in the thermal printer 1 will be described. FIG. 4 is a flowchart showing operation realized by the image processing 23. FIG. 5 is a table showing example parameters for the gradation conversion and the shift processing. FIG. 6 is an illustration showing image data produced by the image processing 23. FIG. 7 is an illustration showing a shift in the lateral direction. FIG. 8 is an explanatory illustration showing a shift in the downward direction so as to produce the image G₆ 31-6.

The image input section 5 of the thermal printer reads the image data 3 (step 101); and the control section 9 holds the acquired image G₁ 31-1 in the image memory 27 of the storage section 7 (step 102).

Next, the control section 9 of the thermal printer 1 executes the image processing 23. First, the control section 9 performs the resolution conversion processing; i.e., converts the resolution of the image G₁ 31-1 in accordance with the resolution of the thermal printer 1 to thereby produce the image G₂ 31-2 (step 103), and stores it in the image memory 27 of the storage section 7. For example, the resolution of the thermal printer 1 is 600 dpi (dots per inch).

The control section 9 of the thermal printer 1 performs the gradation conversion; i.e., converts the gradation of the image G₂ 31-2 to thereby produce the image G₃ 31-3 (step 104), and stores it in the image memory 27 of the storage section 7.
In the case of double tone in which a single color image is divided into two images and these images are shifted and overprinted, ideally, a proper printed image is obtained through performance of gradation conversion of 50%. However, in actuality, when the gradation conversion of 50% is performed, a gap formed between the images when they are overprinted. Therefore, gradation conversion of 60% to 65% is performed. The optimal gradation conversion varies depending on the resolution of the thermal printer 1 and the number of lines per inch (hereinafter may be simply referred to as "the number of lines") of an image to be printed. For example, in a case where the resolution is 600 dpi, the percentage is set to 60% when the number of lines is 60 lpi (lines per inch), set to 60% when the number of lines is 75 lpi, set to 65% when the number of lines is 100 lpi, and set to 65% when the number of lines is 120 lpi, as shown in FIG. 5.

The control section 9 of the thermal printer 1 converts the image G₃ 31-3 obtained through gradation conversion to CMYK data (CMYK separation processing) to thereby produce the image G₄ 31-4 (step 105), and stores it in the image memory 27 of the storage section 7. The image G₄ 31-4 is composed of four image data sets; i.e., cyan image data G_{4C}, magenta image data G_{4M}, yellow image data G_{4Y}, and black image data G_{4K}.

The control section 9 of the thermal printer 1 then performs image shift processing for the respective color image data of the image G₄ 31-4 obtained through the CMYK separation processing; i.e., the cyan image data G_{4C}, the magenta image data G_{4M}, the yellow image data G_{4Y}, and the black image data G_{4K} to thereby produce the image G_{5C} (G_{5M}, G_{5Y}, G_{5K}) 31-5 and the image G_{6C} (G_{6M}, G_{6Y}, G_{6K}) 31-6 as shown in FIG. 6 (step 106). The image G₅ 31-5 is composed of four image data sets; i.e., cyan image data G_{5C}, magenta image data G_{5M}, yellow image data G_{5Y}, and black image data G_{5K}. The image G₆ 31-6 is composed of four image data sets; i.e., cyan image data G_{6C}, magenta image data G_{6M}, yellow image data G_{6Y}, and black image data G_{6K}.
Here, it is assumed that respective image data sets express the C, M, Y, K components with the same angle; for example, the image data sets are of a line screen type (intersection angle: 90°).

In this image shift processing, shift processing is performed in order to enable double-tone printing.
In order to perform double-tone printing, the image G₆ 31-6 (G_{6C}, G_{6M}, G_{6Y}, G_{6K}), which has undergone the shift processing, and the image G₅ 31-5 (G_{5C}, G_{5M}, G_{5Y}, G_{5K}), which has not undergone the shift processing, are produced. That is, the image G₅ 31-5 (G_{5C}, G_{5M}, G_{5Y}, G_{5K}) is identical with the image G₄ 31-4 (G_{4C}, G_{4M}, G_{4Y}, G_{4K}) having undergone color separation.
Subsequently, as shown in FIG. 7, the cyan image data G_{5C}, the magenta image data G_{5M}, the yellow image data G_{5Y}, and the black image data G_{5K}, which are obtained through the CMYK separation of the image G₅ 31-5, are each shifted in the lateral direction by L1 pixels. Further, as shown in FIG. 8, each of these image data sets is shifted downward by L2 pixels. Thus, the cyan image data G_{6C}, magenta image data G_{6M}, yellow image data G_{6Y}, and black image data G_{6K} of the image G₆ 31-6 are produced.

The numbers of pixels L1 and L2 for lateral and downward shifts vary depending on the resolution of the thermal printer 1 and the number of lines of an image to be printed. FIG. 5 shows the number of pixels for rightward shift (hereinafter may be referred to as "rightward-shift pixel number") and the number of pixels for downward shift (hereinafter may be referred to as "downward-shift pixel number") for each of yellow Y, magenta M, cyan C, and black K.
When the resolution of the thermal printer 1 is 600 dpi, in the shift processing for double-tone printing, the image (data) of each color is shifted rightward by 5 pixels and downward by 5 pixels for the case where the number of lines is 60 lpi, shifted rightward by 4 pixels and downward by 4 pixels for the case where the number of lines is 75 lpi, shifted rightward by 3 pixels and downward by 3 pixels for the case where the number of lines is 100 lpi, and shifted rightward by 2 pixels and downward by 2 pixels for the case where the number of lines is 120 lpi.

After the image shift processing, the control section 9 of the thermal printer 1 performs dot processing for the cyan image data G_{5C}, magenta image data G_{5M}, yellow image data G_{5Y}, and black image data G_{5K} of the image G₅ 31-5 and the cyan image data G_{6C}, magenta image data G_{6M}, yellow image data G_{6Y}, and black image data G_{6K} of the image G₆ 31-6 to thereby produce the image G₇ 31-7 and the image G₈ 31-8 (step 107).
The image G₇ 31-7 is composed of four data sets; i.e., cyan data G_{7C}, magenta data G_{7M}, yellow data G_{7Y}, and black data G_{7K}. Similarly, the image G₈ 31-8 is composed of four data sets; i.e., cyan data G_{8C}, magenta data G_{8M}, yellow data G_{8Y}, and black data G_{8K}.

The matrix size of each dot varies depending on the resolution of the thermal printer 1 and the number of lines of an image to be printed. As shown in FIG. 5, when the resolution is 600 dpi, the matrix size is 10 x 10 pixels for the case where the number of lines is 60 lpi, 8 x 8 pixels for the case where the number of lines is 75 lpi, 6 x 6 pixels for the case where the number of lines is 100 lpi, and 5 x 5 pixels for the case where the number of lines is 120 lpi.

The control section 9 of the thermal printer 1 performs image reverse shift processing for the cyan data G_{8C}, magenta data G_{8M}, yellow data G_{8Y}, and black data G_{8K} of the image G₈ 31-8 to thereby produce the image G₉ 31-9 (cyan data G_{9C}, magenta data G_{9M}, yellow data G_{9Y}, black data G_{9K}) (step 108).
In this image reverse shift processing, each image (data) is shifted by the same number of pixels as in the image shift processing of step 106 but in the direction opposite that in the image shift processing of step 106.
Since the image G₈ 31-8 has undergone the shift processing and the dot processing, through performance of the reverse shift processing on the image G₈ 31-8 having undergone the dot processing, the image G₈ 31-8 is moved to the correct position.
The image G₉ 31-9 is image data composed of four data sets; i.e., cyan data G_{9C}, magenta data G_{9M}, yellow data G_{9Y}, and black data G_{9K}, and is held in the image memory 27 of the storage section 7 of the thermal printer 1.

The control section 9 of the thermal printer 1 ends the step of the image processing 23 and sends the image G₇ 31-7 (cyan data G_{7C}, magenta data G_{7M}, yellow data G_{7Y}, black data G_{7K}) and the image G₉ 31-9 (cyan data G_{9C}, magenta data G_{9M}, yellow data G_{9Y}, black data G_{9K}) to the printing section 11 as double-tone image data (step 109).
In accordance with an instruction from the control section 9, the printing section 11 prints and outputs the image G₇ 31-7 and the image G₉ 31-9 as the output image 15 (step 110). Since overprinting is performed through use of double tone and shift processing, the output image 15 can be obtained as a smooth halftone image which is free of blurring due to heat accumulation of the thermal head and does not provide the sensation of roughness.

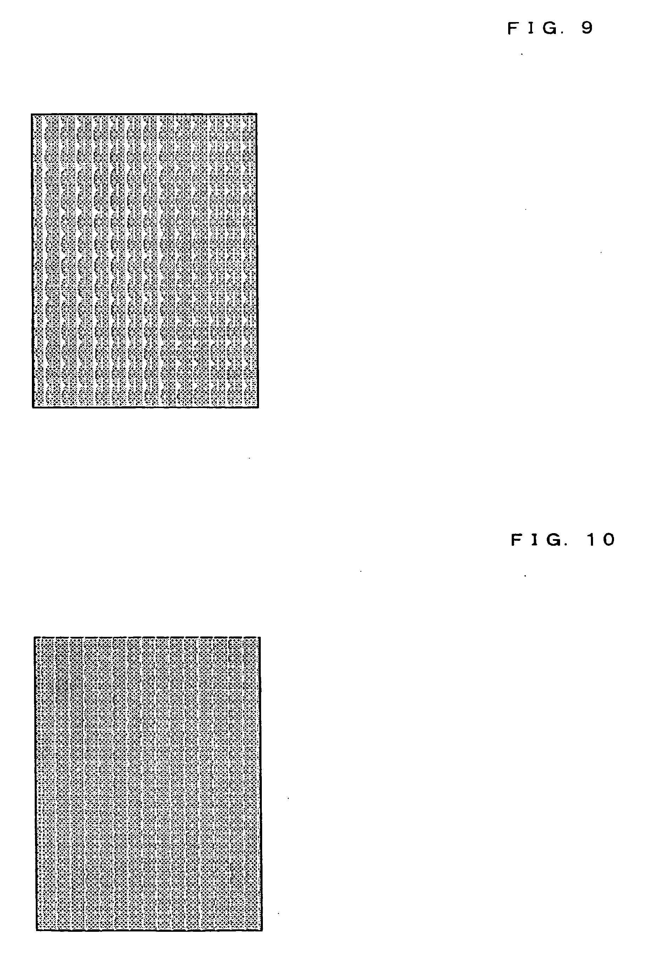

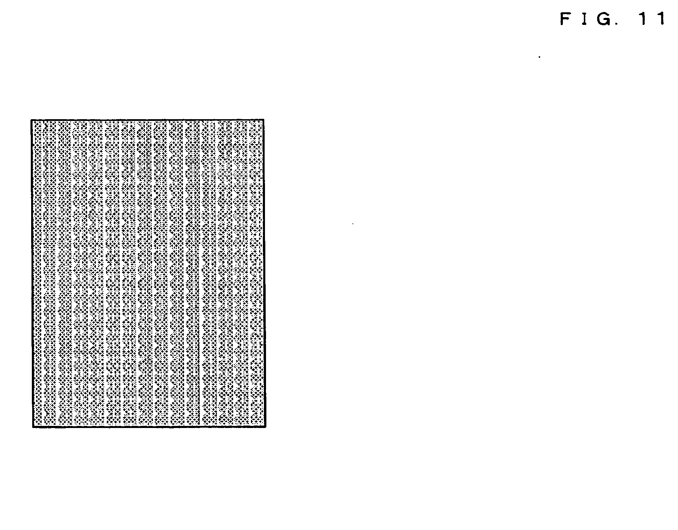

Next, optimization of the image shift processing will be described. FIG. 9 is an illustration showing an example output image for the case where the number of lines of the thermal printer 1 is 90 lpi. FIG. 10 is an illustration showing an example output image for the case where the number of lines of the thermal printer is 75 lpi. FIG. 11 is an illustration showing an example output image for the case where the number of lines of the thermal printer is 100 lpi.

FIG. 9 shows an output image obtained in the case where the resolution of the thermal printer 1 was set to 600 dpi, the number of lines was set to 90 lpi, and rightward shifting of 3 pixels was performed. Since the matrix size of the dot becomes 7 x 7 pixels (600/90 ≅ 7), the arrangement becomes non-uniform. Further, since shift in the vertical direction is not performed, clods are formed.

FIG. 10 shows an output image obtained in the case where the shift processing was optimized; i.e., in the case where the resolution of the thermal printer 1 was set to 600 dpi, the number of lines was set to 75 lpi, and rightward shifting of 4 pixels and downward shifting of 4 pixels were performed. Since the matrix size of the dot becomes 8 x 8 pixels (600/75 = 8), the arrangement becomes uniform, and the granularity is decreased as compared with the output image of FIG. 9.

FIG. 11 shows an output image obtained in the case where the shift processing was optimized and the number of lines was further increased; i.e., in the case where the resolution of the thermal printer 1 was set to 600 dpi, the number of lines was set to 100 lpi, and rightward shifting of 3 pixels and downward shifting of 3 pixels were performed. Since the matrix size of the dot becomes 6 x 6 pixels (600/100 = 6), the arrangement becomes uniform, and the granularity is further decreased as compared with the output image of FIG. 10, because of the increased number of lines.

As described above, according to the present embodiment, there can be provided a thermal recording apparatus, etc., which can provide smooth halftone images without being influenced by heat accumulated in a thermal head.

Next, a second embodiment of the thermal recording apparatus of the present invention will be described.

In the second embodiment, the structure and the processing details of the thermal printer 1 are generally the same as those in the first embodiment shown in FIGS. 1 and 2.
The second embodiment differs from the first embodiment in the image shift processing (step 106 of FIG. 4) of the image processing 23. That is, in the second embodiment, the number of pixels by which image data are shifted is changed on a color-by-color basis among cyan (C), magenta (M), yellow (Y), and black (K). Thus, steps formed when images of the respective colors are overprinted in a dot-on-dot fashion are decreased, and printing miss and adhesion failure can be eliminated.

The flow of the processing is identical with that of the first embodiment from step 101 to step 105 of FIG. 4. That is, after having read the image data 3 through the image input section 5 (step 101), the control section 9 holds the acquired image G₁ 31-1 in the image memory 27 of the storage section 7 (step 102). Subsequently, the control section 9 performs the resolution conversion processing; i.e., converts the resolution of the image G₁ 31-1 in accordance with the resolution of the thermal printer 1 to thereby produce the image G₂ 31-2 (step 103). The control section 9 then performs the gradation conversion; i.e., converts the gradation of the image G₂ 31-2 to thereby produce the image G₃ 31-3 (step 104), and converts the image G₃ 31-3 to CMYK data (CMYK separation processing) to thereby produce the image G₄ 31-4 (step 105), and stores it in the image memory 27 of the storage section 7.
The image G₄ 31-4 obtained through the gradation conversion is composed of four image data sets; i.e., cyan image data G_{4C}, magenta image data G_{4M}, yellow image data G_{4Y}, and black image data G_{4K}.

Next, the control section 9 performs image shift processing for the image G₄ 31-4 to thereby produce images G_{5C}, G_{5M}, G_{5Y}, G_{5K} 31-5 and images G_{6C}, G_{6M}, G_{6Y}, G_{6K} 31-6 (step 106).
In the image shift processing for producing the images G_{5C}, G_{5M}, G_{5Y}, G_{5K} 31-5, color-by-color shift processing is performed, and in the image shift processing for producing the images G_{6C}, G_{6M}, G_{6Y}, G_{6K} 31-6, shift processing for double-tone printing is performed.

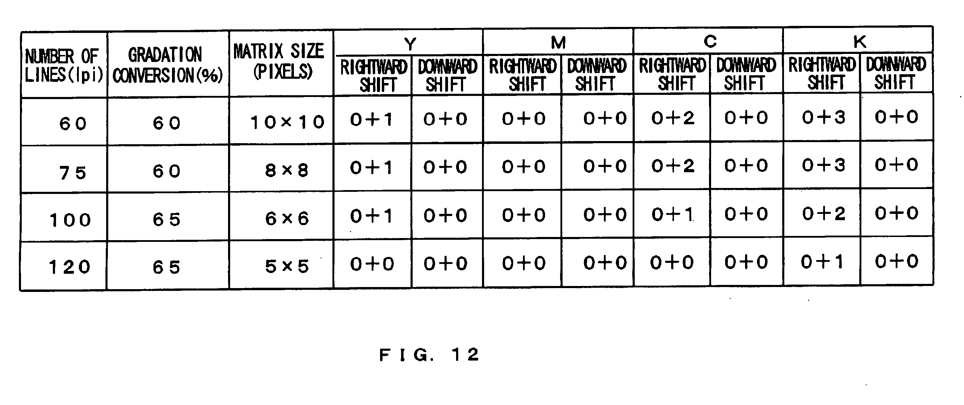

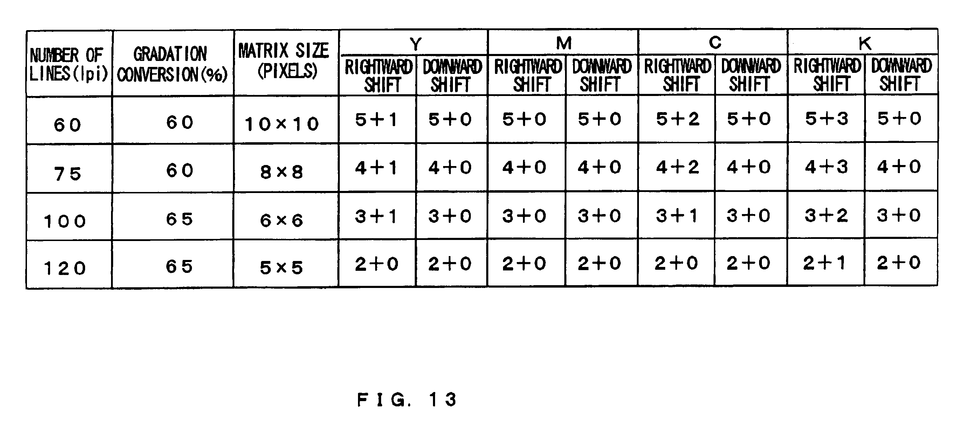

FIG. 12 shows example numbers of pixels by which the cyan image data G_{4C}, magenta image data G_{4M}, yellow image data G_{4Y}, and black image data G_{4K} of the image G₄ 31-4 are shifted, respectively, by the color-by-color shift processing. FIG. 13 shows example numbers of pixels by which the cyan image data G_{4C}, magenta image data G_{4M}, yellow image data G_{4Y}, and black image data G_{4K} of the image G₄ 31-4 are shifted, respectively, by the shift processing for double-tone printing.

FIGS. 12 and 13 each show a rightward-shift pixel number and a downward-shift pixel number for each color. For example, of the rightward-shift pixel number "5+1" in FIG. 13, the former numerical value "5" represents a shift pixel number for double-tone printing, and the latter numerical value "1" represents a shift pixel number for color-by-color shift processing.

In the color-by-color shift processing, the cyan image data G_{4C}, magenta image data G_{4M}, yellow image data G_{4Y}, and black image data G_{4K} of the image G₄ 31-4 are shifted laterally by respective numbers of pixels, which differ from one another, to thereby produce cyan image data G_{5C}, magenta image data G_{5M}, yellow image data G_{5Y}, and black image data G_{5K} of the image G₅ 31-5.

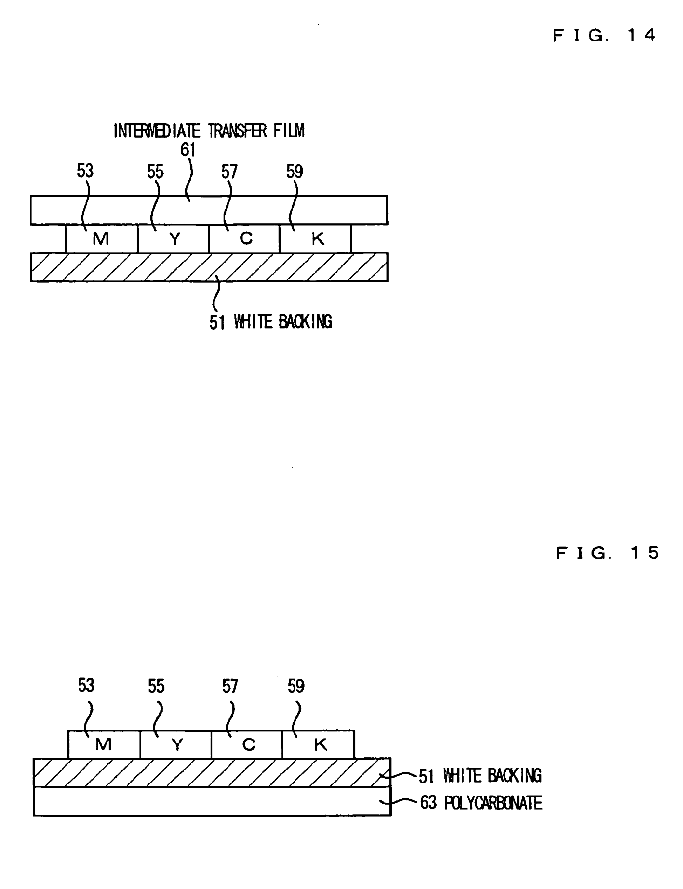

As will be described later, in a case where printing is performed on an intermediate transfer film 61, as shown in FIG. 14, a magenta (M) image 53, a yellow (Y) image 55, a cyan (C) image 57, and a black (K) image 59 are shifted laterally by respective numbers of pixels, which differ from one another, are overprinted on the intermediate transfer film 61, and a white backing 51 is applied. Subsequently, as shown in FIG. 15, these images and the backing are transferred from the intermediate transfer film 61 to a polycarbonate sheet 63.

When the number of lines increases, there arises a possibility of the images of different colors overlapping even if the color-by-color shift processing is performed. However, the color-by-color shift processing is performed such that the printed image becomes flat to a possible degree.
Basically, the shift processing is performed while the magenta (M) image is used as a reference. Since the black (K) image produces a large step, the shift amount is increased, and is separated from the images of other colors to a possible extent. Further, since the color difference between the cyan (C) image and the magenta (M) image is large, these images are separated from each other to a possible extent.

The number of pixels by which the image of each color is shifted varies depending on the resolution of the thermal printer 1 and the number of lines of an image to be printed. When the resolution of the thermal printer 1 is 600 dpi, in the case where the number of lines is 60 lpi, the yellow (Y) image is shifted rightward by one pixel, the magenta (M) image is not shifted, the cyan (C) image is shifted rightward by two pixels, and the black (K) image is shifted rightward by three pixels, as shown in FIG. 12. Further, in the case where the number of lines is 75 lpi, the yellow (Y) image is shifted rightward by one pixel, the magenta (M) image is not shifted, the cyan (C) image is shifted rightward by two pixels, and the black (K) image is shifted rightward by three pixels; in the case where the number of lines is 100 lpi, the yellow (Y) image is shifted rightward by one pixel, the magenta (M) image is not shifted, the cyan (C) image is shifted rightward by one pixel, and the black (K) image is shifted rightward by two pixels; and in the case where the number of lines is 120 lpi, only the black (K) image is shifted rightward by one pixel.
For example, in FIG. 14, the yellow (Y) image, the cyan (C) image, and the black (K) image are shifted in relation to the magenta (M) image by one pixel, two pixels, and three pixels, respectively.

In the shift processing for double-tone printing, shift processing is performed in a manner similar to that in the first embodiment. That is, as shown in FIG. 7, the cyan image data G_{4C}, magenta image data G_{4M}, yellow image data G_{4Y}, and black image data G_{4K} of the image G₄ 31-4 are each shifted in the lateral direction by L1 pixels. Further, as shown in FIG. 8, each of these image data sets is shifted downward by L2 pixels. Thus, the cyan image data G_{6C}, magenta image data G_{6M}, yellow image data G_{6Y}, and black image data G_{6K} of the image G₆ 31-6 are produced.

The numbers of pixels L1 and L2 for lateral and downward shifts vary depending on the resolution of the thermal printer 1 and the number of lines of an image to be printed.
When the resolution of the thermal printer 1 is 600 dpi, in the shift processing for double-tone printing, as shown in FIG. 13, the image (data) of each color is shifted rightward by 5 pixels and downward by 5 pixels for the case where the number of lines is 60 lpi, shifted rightward by 4 pixels and downward by 4 pixels for the case where the number of lines is 75 lpi, shifted rightward by 3 pixels and downward by 3 pixels for the case where the number of lines is 100 lpi, and shifted rightward by 2 pixels and downward by 2 pixels for the case where the number of lines is 120 lpi.

As shown in FIG. 13, in the shift processing for double-tone printing, each image is shifted by the number of pixels, which is obtained by adding, to the above-described number of pixels, the number of pixels by which the image is to be shifted by the color-by-color shift processing.
That is, when the number of lines is 60 lpi, for the case of yellow Y, 6, which is obtained by adding the number of pixels 5 for the shifting for double-tone printing to the number of pixels 1 for the color-by-color shifting, corresponds to the numbers of pixel L1 for lateral shift.

The color-by-color shift processing and the shift processing for double-tone printing may be performed simultaneously in a combined manner, or may be performed separately.

Through the above-described processing, the image shift processing for double-tone printing of the second embodiment ends (step 106).

The image processing 23 performed by the control section 9 after the image shift processing is identical with that in the first embodiment (steps 107 to 110).
First, the control section 9 of the thermal printer 1 performs dot processing for the image G₅ 31-5 (cyan image data G_{5C}, magenta image data G_{5M}, yellow image data G_{5Y}, black image data G_{5K}) and the image G₆ 31-6 (cyan image data G_{6C}, magenta image data G_{6M}, yellow image data G_{6Y}, black image data G_{6K}), which have undergone the image shift processing, to thereby produce the image G₇ 31-7 (cyan data G_{7C}, magenta data G_{7M}, yellow data G_{7Y}, black data G_{7K}) and an image G₈ 31-8 (cyan data G_{8C}, magenta data G_{8M}, yellow data G_{8Y}, black data G_{8K}) (step 107).

After that, the control section 9 of the thermal printer 1 performs image reverse shift processing for the image G₈ 31-8 (cyan data G_{8C}, magenta data G_{8M}, yellow data G_{8Y}, black data G_{BK}) to thereby produce the image G₉ 31-9 (cyan data G_{9C}, magenta data G_{9M}, yellow data G_{9Y}, black data G_{9K}) (step 108).
In this image reverse shift processing, each image (data) is shifted by the same number of pixels as in the image shift processing of step 106 but in the direction opposite that in the image shift processing of step 106.

Then, the control section 9 of the thermal printer 1 ends the step of the image processing 23 and sends the image G₇ 31-7 (cyan data G_{7C}, magenta data G_{7M}, yellow data G_{7Y}, black data G_{7K}) and the image G₉ 31-9 (cyan data G_{9C}, magenta data G_{9M}, yellow data G_{9Y}, black data G_{9K}) to the printing section 11 as image data for double-tone printing (step 109).
In accordance with an instruction form the control section, the printing section 11 prints and outputs the image G₇ 31-7 and the image G₉ 31-9 as the output image 15 (step 110) .

Since image data sets having undergone the color-by-color shift processing and the shift processing for double-tone printing are overprinted, the output image 15 can be obtained as a smooth halftone image which is free of blurring due to heat accumulation of the thermal head and does not provide the sensation of roughness.
As described above, when printing is performed on the intermediate transfer film 61, images of different colors are laterally shifted by respective numbers of pixels, which differ from one another, so as to shift the positions of dots of yellow, magenta, cyan, and black, and the shifted images are overprinted. Thus, as shown in FIGS. 14 and 15, the steps can be minimized, and it becomes possible to suppress printing miss of the white backing or adhesion failure, which would occur when the white backing is applied or when the printed images and the backing are transferred to the polycarbonate sheet.

Next, a third embodiment of the thermal recording apparatus of the present invention will be described.

In the third embodiment, the structure and the processing details of the thermal printer 1 are generally the same as those in the first embodiment shown in FIGS. 1 and 2.
In the third embodiment, through partial modification of the flow of the image processing 23, the black (K) image or/and the yellow (Y) image are printed in single tone, to thereby increase the speed of the image printing 25 at the printing section 11, and reduce the amount of a material, such as ink, used for the printing.

The reason why the black (K) image, for example, may be printed in single tone is that in many cases black (K) is used at edge portions of an image, and it is unnecessary to obtain a smooth halftone image through double-tone printing. Further, since yellow (Y) is not noticeable in the printed image, in many cases, no problem arises even when the yellow (Y) image is printed in single tone.
The present embodiment may be modified to select, depending on the original image G₁, color images to be printed in single tone, before processing the images.

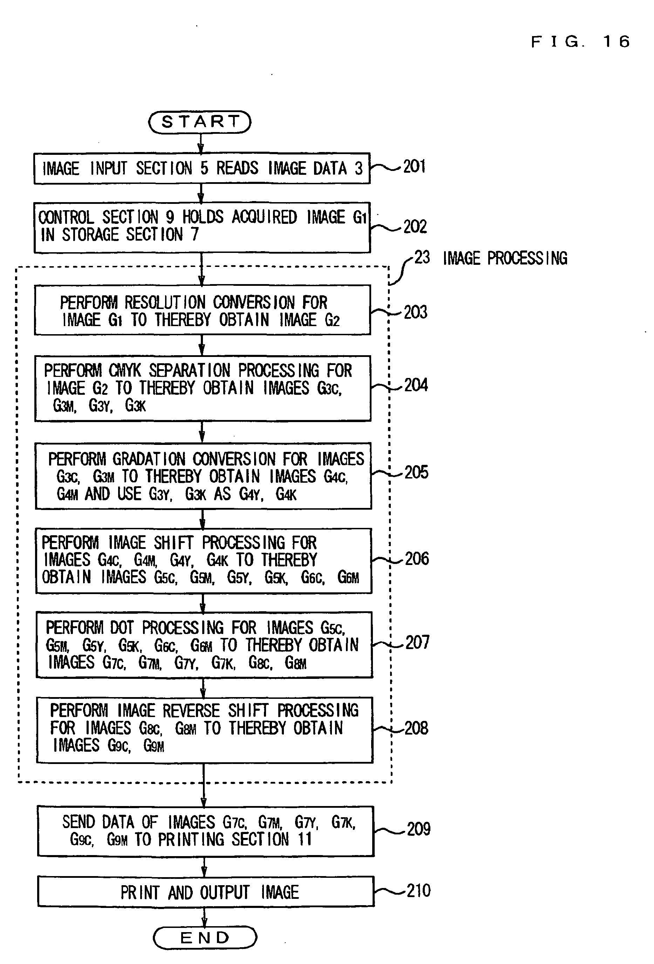

In the following, there will be described the processing flow for the case where single-tone processing is performed for two colors; i.e., black (K) and yellow (Y). FIG. 16 is a flowchart showing the flow of the image processing 23 for the case where images of two colors; i.e., black (K) and yellow (Y), are printed in single tone.

Steps 210 to 203 are identical with step 101 to step 103 of FIG. 4. The control section 9 performs the resolution conversion processing; i.e., converts the resolution of the acquired image G₁ (step 203) to thereby produce the image G₂. Subsequently, the control section 9 performs the CMYK separation processing (step 204) to thereby produce the image G₃ (G_{3C}, G_{3M}, G_{3Y}, G_{3K}).
Next, the control section 9 performs the gradation conversion for the image G₃ having undergone the color separation processing (step 205). At that time, for the cyan (C) image and the magenta (M) image, the control section 9 performs the gradation processing for double tone in the same manner as in the first embodiment, to thereby produce image data G_{4C} and G_{4M}. Sine the yellow (Y) image and the black (K) image are single tone, the control section 9 does not perform the gradation processing therefor, and uses the image data G_{3Y} and G_{3K} as image data G_{4Y} and G_{4K}.
That is, for the cyan (C) image and the magenta (M) image, as shown in FIG. 5, the control section 9 performs the gradation conversion of 60% when the resolution is 600 dpi, and the number of lines is 60 lpi (lines per inch). This value is optimally determined in accordance with the resolution of the thermal printer 1 and the number of lines. Further, since the yellow (Y) image and the black (K) image are single tone, their image data (gradation: 0 to 100%) are used as they are.

Next, the control section 9 performs the shift processing (step 206). The control section 9 carries out the shift processing for double-tone printing, shown in FIGS. 7 and 8, for the cyan (C) image data G_{4C} and the magenta (M) image data G_{4M} of the image G₄ 31-4 (G_{4C}, G_{4M}, G_{4Y}, G_{4K}).

That is, the control section 9 first stores an image identical with the image G₄ 31-4 (G_{4C}, G_{4M}, G_{4Y}, G_{4K}) having undergone the color separation as an image G₅ 31-5 (G_{5C}, G_{5M}, G_{5Y}, G_{5K}), which is data for single tone. After that, the control section 9 carries out the shift processing for the cyan (C) image data G_{5C} and the magenta (M) image data G_{5M} of the image G₅ 31-5 (G_{5C}, G_{5M}, G_{5Y}, G_{5K}). That is, the control section 9 shifts each of the cyan (C) image data G_{5C} and the magenta (M) image data G_{5M} in the lateral direction by L1 pixels (FIG. 7) to thereby produce cyan image data G_{PC} and magenta image data G_{PM}. Subsequently, the control section 9 shifts each of the cyan image data G_{PC} and the magenta image data G_{PM} in the downward direction by L2 pixels (FIG. 8) to thereby produce cyan image data G_{6C} and magenta image data G_{6M}.

The number of pixels L1 and L2 for the lateral shift and the downward shift vary depending on the resolution of the thermal printer 1 and the number of lines of an image to be printed. For example, the number of pixels L1 and L2 may be the same as those for the shifting for double-tone printing shown in FIG. 5.
Through the above-described shift processing, an image G₅ 31-5 (G_{5C}, G_{5M}, G_{5Y}, G_{5K}) and an image G₆ 31-6 (G_{6C}, G_{6M}) are produced, and are stored in the image memory 27 of the storage section 7.

After the image shift processing, the control section 9 of the thermal printer 1 performs dot processing for the image G₅ 31-5 (G_{5C}, G_{5M}, G_{5Y}, G_{5K}) and the image G₆ 31-6 (G_{6C}, G_{6M}) to thereby produce the image G₇ 31-7 (G_{7C}, G_{7M}, G_{7Y}, G_{7K}) and the image G₈ 31-8 (G_{8C}, G_{8M}) (step 207).
The image G₇ 31-7 is composed of four image data sets; i.e., cyan image data G_{7C}, magenta image data G_{7M}, yellow image data G_{7Y}, and black image data G_{7K}. The image G₈ 31-8 is composed of two image data sets; i.e., cyan image data G_{8C} and magenta image data G_{8M}.

The matrix size of each dot varies depending on the resolution of the thermal printer 1 and the number of lines. As shown in FIG. 5, when the resolution is 600 dpi, the matrix size is 10 x 10 pixels for the case where the number of lines is 60 lpi, 8 x 8 pixels for the case where the number of lines is 75 lpi, 6 x 6 pixels for the case where the number of lines is 100 lpi, and 5 x 5 pixels for the case where the number of lines is 120 lpi.

After that, the control section 9 of the thermal printer 1 performs image reverse shift processing for the cyan image data G_{8C} and the magenta image data G_{8M} of the image G₈ 31-8 to thereby produce the image G₉ 31-9 (step 208). In the image reverse shift processing, each image (data) is shifted by the same number of pixels as in the image shift processing of step 206 but in the direction opposite that in the image shift processing of step 206. The produced image G₉ 31-9 is stored in the image memory 27 of the storage section 7.
That is, when the resolution is 600 dpi and the number of lines is 60 lpi, in the image reverse shift processing, the cyan image data G_{8C} is shifted upward by five pixels and leftward by five pixels to thereby produce cyan image data G_{9C}; and the magenta image data G_{8M} is shifted upward by five pixels and leftward by five pixels to thereby produce magenta image data G_{9M}. That is, the image G₉ 31-9 is composed of two image data sets; i.e., cyan image data G_{9C} and magenta image data G_{9M}.

Through the above-descried processing, the step of the image processing 23 by the control section 9 ends. The image G₇ 31-7 (G_{7C}, G_{7M}, G_{7Y}, G_{7K}) and the image G₉ 31-9 (G_{9C}, G_{9M}) are obtained as the final data resulting from the image processing. For cyan (C) and magenta (M), there are produced two types of image data; i.e., the image G₇ and the image G₉, which serve as image data for double-tone printing. Meanwhile, for yellow (Y) and black (K), there is produced a single type of data; i.e., the image G₇, which serves as image data for single-tone printing.

The control section 9 sends to the printing section 11 data of the image G₇ 31-7 (G_{7C}, G_{7M}, G_{7Y}, G_{7K}) and the image G₉ 31-9 (G_{9C}, G_{9M}), which are obtained through the above-described processing (step 209).
In accordance with an instruction from the control section 9, the printing section 11 prints and outputs the image G₇ 31-7 (G_{7C}, G_{7M}, G_{7Y}, G_{7K}) and the image G₉ 31-9 (G_{9C}, G_{9M}) as the output image 15 (step 210). Double-tone printing is performed for cyan (C) and magenta (M), and single-tone printing is performed for yellow (Y) and black (K).

When the image shift processing and double-tone printing are performed only for cyan (C) and magenta (M) and single-tone printing is performed for yellow (Y) and black (K) as described above, the number of times of printing processing can be reduced to 6 times from 8 times (4 colors x 2) required in the case where double-tone printing is performed for all the colors. Thus, it becomes possible to increase the printing speed and reduce the material required for printing, without influencing the printing quality of the output image 15.

In the above-described third embodiment, single-tone printing is performed for yellow (Y) and black (K). However, depending on the type of an original image, single-tone printing may be performed only for black (K). In this case, the shift processing for double-tone printing is performed for yellow (Y), and, as a result of the image processing 23, an image G₇ 31-7 (G_{7C}, G_{7M}, G_{7Y}, G_{7K}) and an image G₉ 31-9 (G_{9C}, G_{9M}, G_{9Y}) are produced. The printing section 11 performs single-tone printing for black (K), and performs double-tone printing for the remaining three colors, whereby the number of times of printing processing can be reduced to 7 times.

Next, a fourth embodiment of the thermal recording apparatus of the present invention will be described.

In the fourth embodiment, the structure and the processing details of the thermal printer 1 are generally the same as those in the first embodiment shown in FIGS. 1 and 2.
In the fourth embodiment, through partial modification of the flow of the image processing 23, special shift processing is performed on images to be overprinted at a highlight portion which is low in gradation value, to thereby mitigate nonuniformity associated with overprinting at the highlight portion.

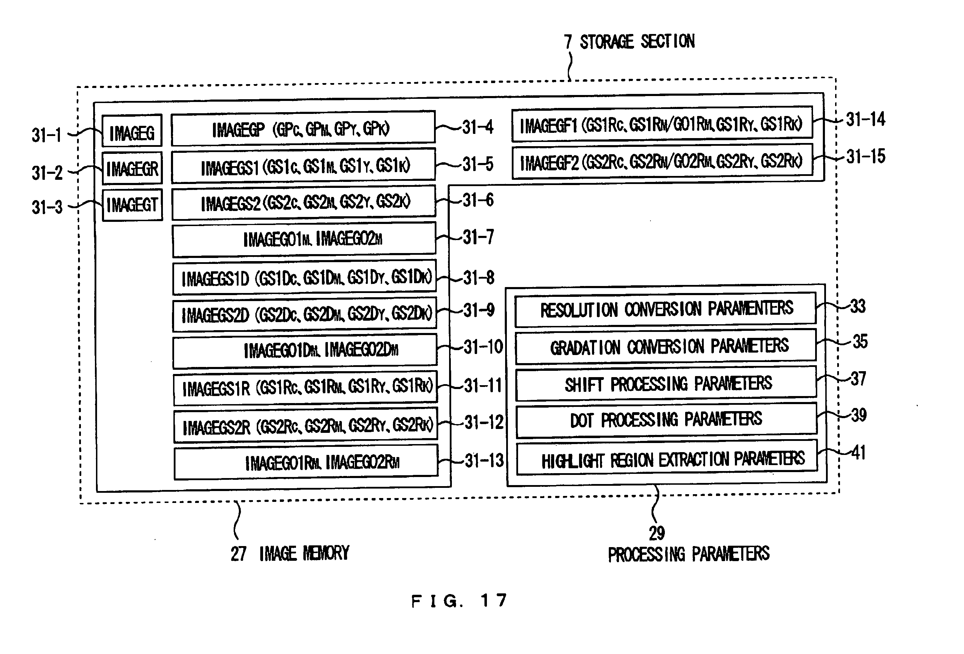

FIG. 17 is a diagram showing the details of the storage section 7 of a thermal printer 1. As in the above-described first through third embodiments, the memory section 7 is composed of an image memory 27 for storing image data to undergo image processing, and processing parameter memory 29 for storing parameters used when the image processing is performed. Further, although not illustrated, the storage section 7 further stores a control program, and control parameters of the printing section 11 such as the thermal head.

The image data 3 of R (red), G (green), B (blue), which represent the original image acquired by the thermal printer 1, are registered in the image memory 23, as an image G (31-1). An image GR (31-2), an image GT (31-3), an image GP (31-4), an image GS1 (31-5), an image GS2 (31-6), images GO1_{M} and GO2_{M} (31-7), an image GS1D (31-8), an image GS2D (31-9), images GO1D_{M} and GO2D_{M} (31-10), an image GS1R (31-11), an image GS2R (31-12), images GO1R_{M} and GO2R_{M} (31-13), an image GF1 (31-14), and an image GF2 (31-15) are registered as image data calculated in the course of the image processing 23.

Notably, the image GP (31-4), the image GS1 (31-5), the image GS2 (31-6), the image GS1D (31-8), the image GS2D (31-9), the image GS1R (31-11), the image GS2R (31-12), the image GF1 (31-14), and the image GF2 (31-15) are image data obtained thorough processing performed after conversion of the image GT (31-3) to CMYK data (CMYK separation), and each is composed of four image data sets of cyan, magenta, yellow, and black.

Further, the images GO1_{M} and GO2_{M} (31-7), the images GO1D_{M} and GO2D_{M} (31-10) , and the images GO1R_{M} and GO2R_{M} (31-13) are image data regarding an any color image to be printed second or later in the overprinting, among the images of cyan, magenta, yellow, and black.
Here, there will be described in detail later a case where the images of cyan (C), magenta (M), yellow (Y), and black (K) are overprinted in this sequence, and the images GO1_{M} and GO2_{M} (31-7), the images GO1D_{M} and GO2D_{M} (31-10), and the images GO1R_{M} and GO2R_{M} (31-13) are produced for the magenta (M) image, which is printed second.

The processing parameter memory 29 of the storage section 7 stores resolution conversion parameters 33, gradation conversion parameters 35, shift processing parameters 37, dot processing parameters 39, and highlight region extraction parameters 41, which are used in the image processing 23. These parameters will be described in detail later.

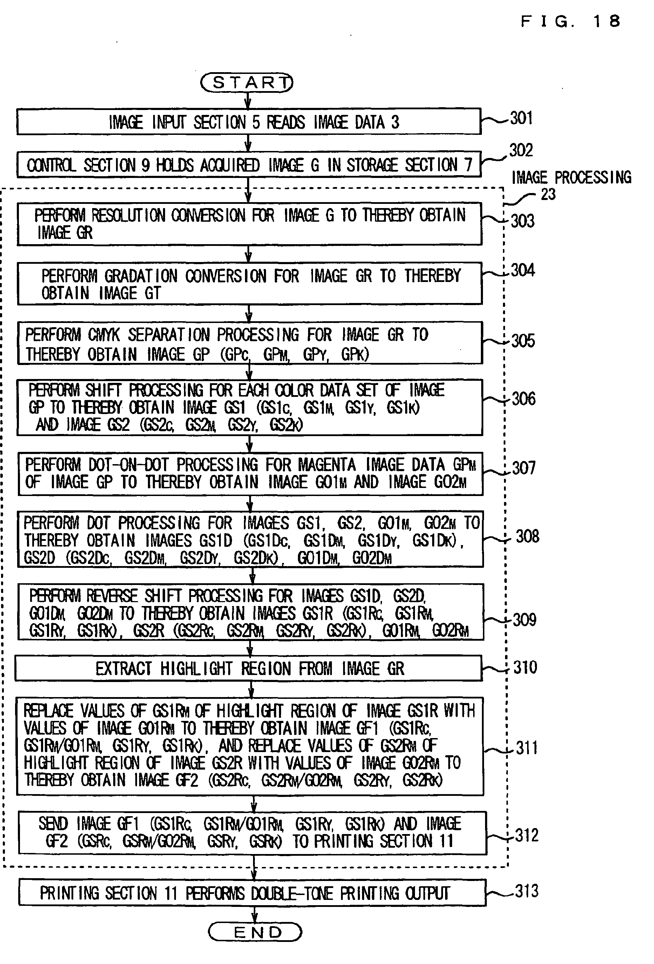

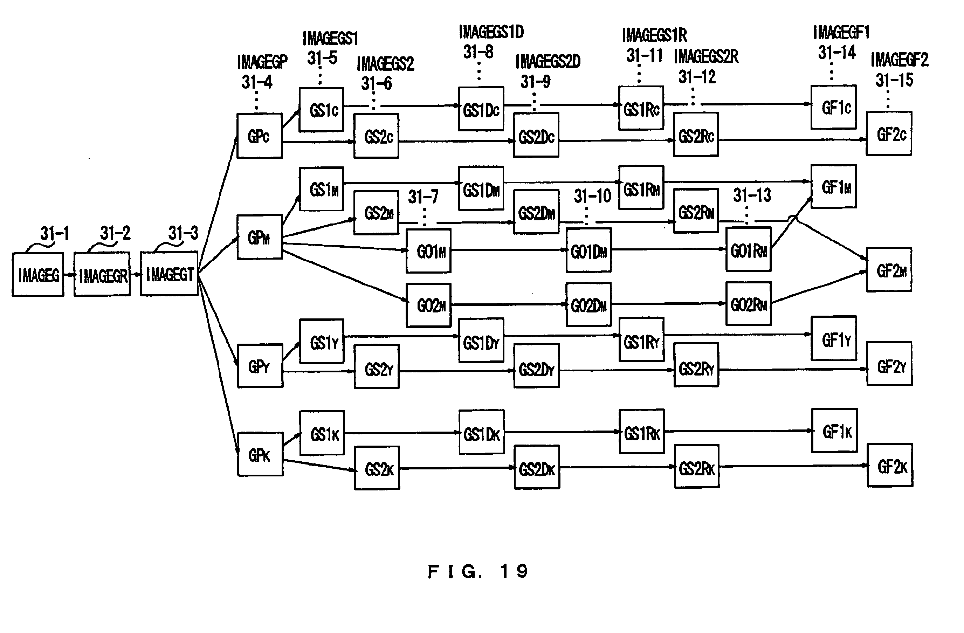

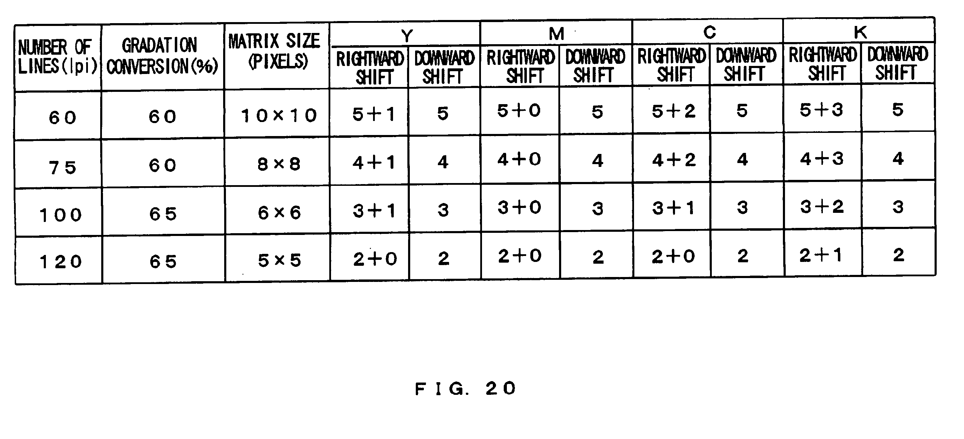

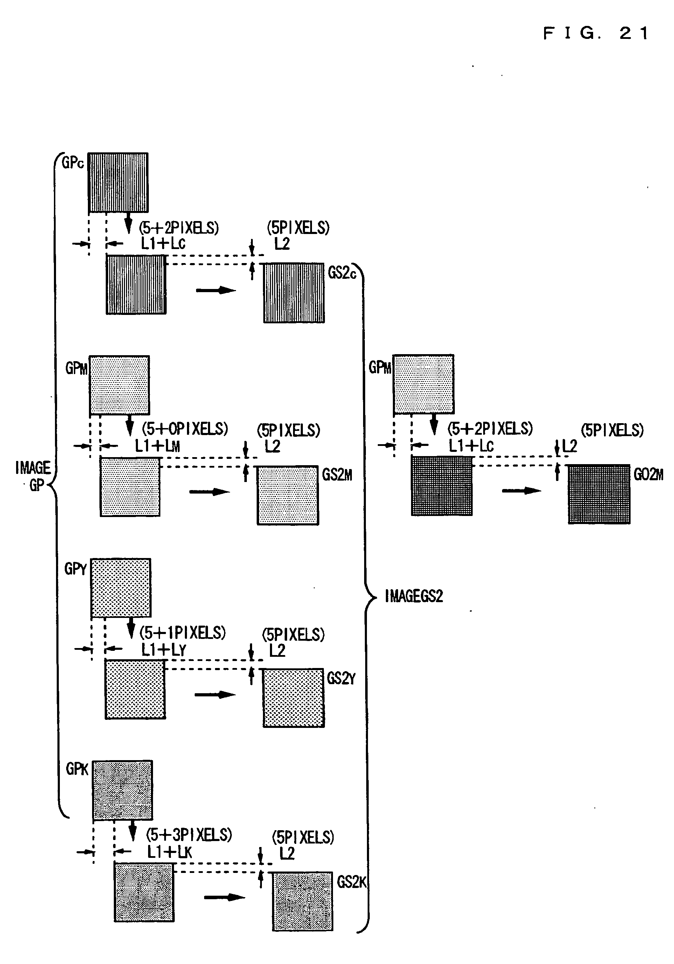

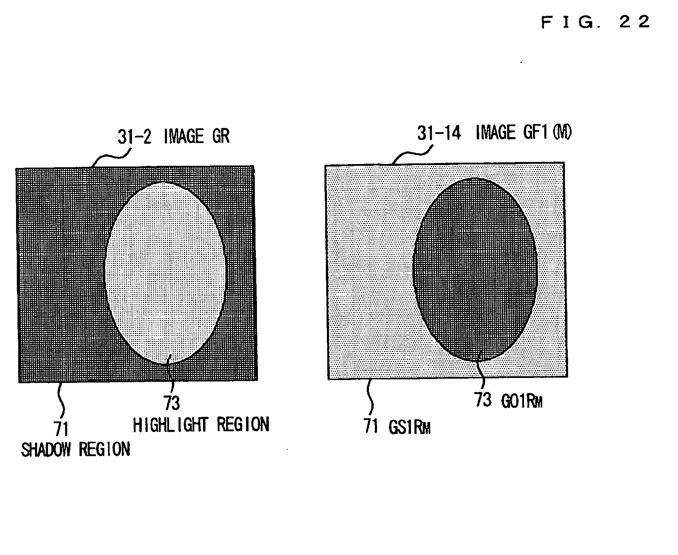

Next, the flow of the image processing according to the fourth embodiment will be described. FIG. 18 is a flowchart showing operation realized by the image processing 23. FIG. 19 is a diagram showing transitions of image data. FIG. 20 is a table showing example parameters used for gradation conversion, shift processing, and dot processing. FIG. 21 is an explanatory view showing the shift processing. FIG. 22 is an explanatory view showing combining of data in a highlight region.

The processing flow of the image processing 23 will be described with reference to FIG. 18.
The image input section 5 of the thermal printer 1 reads the image data 3 (step 301); and the control section 9 holds the acquired image G (31-1) in the image memory 27 of the storage section 7 (step 302).

Next, the control section 9 of the thermal printer 1 executes the image processing 23. First, the control section 9 performs the resolution conversion processing; i.e., converts the resolution of the image G (31-1) in accordance with the resolution of the thermal printer 1 to thereby produce the image GR (31-2) (step 303), and stores it in the image memory 27 of the storage section 7. For example, the resolution of the thermal printer 1 is 600 dpi (dots per inch), and the image data are matched with that resolution.

Next, the control section 9 of the thermal printer 1 performs the gradation conversion; i.e., converts the gradation of the image GR (31-2) to thereby produce the image GT (31-3) (step 304), and stores it in the image memory 27 of the storage section 7. The method of gradation conversion is the same as that employed in the above-described first through third embodiments.

The control section 9 of the thermal printer 1 converts the image GT (31-3) obtained through gradation conversion to CMYK data (CMYK separation processing) to thereby produce the image GP (31-4) (step 305), and stores it in the image memory 27 of the storage section 7. As shown in FIG. 19, the image GP (31-4) is composed of four image data sets; i.e., cyan image data GP_{C}, magenta image data GP_{M}, yellow image data GP_{Y}, and black image data GP_{K}.

The control section 9 of the thermal printer 1 then performs image shift processing for the respective color image data of the image GP (31-4) obtained through the CMYK separation processing; i.e., the cyan image data GP_{C}, the magenta image data GP_{M}, the yellow image data GP_{Y}, and the black image data GP_{K} to thereby produce the image GS1 (31-5) and an image GS2 (31-6) as shown in FIG. 19 (step 306). The image shift processing (step 306) for producing the image GS1 (31-5) and the image GS2 (31-6) will be described in detail later. However, this processing is basically the same as the image shift processing of the second embodiment. As shown in FIG. 19, the image GS1 (31-5) and the image GS2 (31-6) are each composed of four image data sets of cyan C, magenta M, yellow Y, and black K.
Here, it is assumed that respective image data sets express the C, M, Y, K components with the same angle, for example, image data sets are of a line screen type (intersection angle: 90°).

In the image shift processing for generating the images data of respective colors of the image GS1 (31-5) from the images data of respective colors of the image GP (31-4), processing of shifting the image data by the number of pixels determined for each color is performed. Meanwhile, in the image shift processing for generating the images data of respective colors of the image GS2 (31-6) from the images data of respective colors of the image GP (31-4), the shift processing for performing double-tone printing is carried out in addition to the processing of shifting the image data by the number of pixels determined for each color as in the above-described case.

FIG. 20 shows example shift pixel numbers employed in the image shift processing. A rightward-shift pixel number and a downward-shift pixel number are shown for each color. For example, the rightward-shift pixel number (L1+L_{Y}) for the yellow (Y) is "5+1" when the resolution is 600 dpi and the number of lines is 60 lpi. This shows that the yellow (Y) image is shifted rightward by 5 pixels (L1) for double-tone printing, and is shifted rightward by one pixel, which is the number of pixels (L_{Y}) determined for yellow (Y).

That is, in the shift processing for producing the image GS1 (31-5), the data of the respective colors of the image GP (31-4) are shifted rightward by L_{Y} pixels for yellow (Y), L_{M} pixels for magenta (M), L_{C} pixels for cyan (C), and L_{K} pixels for black (K), to thereby obtain the image GS1 (31-5). When the resolution is 600 dpi and the number of lines is 60 lpi, the rightward shift is performed by one pixel for yellow (Y), 2 pixels for cyan (C), and 3 pixels for black (K). The rightward shift is not performed for magenta (M) because L_{M} = 0.

Meanwhile, in the shift processing for producing the image GS2 (31-6), in order to perform double-tone printing, shifting is performed rightward by L1 pixels + the shift pixel number of each color, and downward by L2 pixels. That is, as shown in FIG. 21, the cyan (C) image is shifted rightward by (5+2) pixels; i.e., 7 pixels, and downward by 5 pixels. The magenta (M) image is shifted rightward by (5+0) pixels; i.e., 5 pixels, and downward by 5 pixels. The yellow (Y) image is shifted rightward by (5+1) pixels; i.e., 6 pixels, and downward by 5 pixels. The black (K) image is shifted rightward by (5+3) pixels; i.e., 8 pixels, and downward by 5 pixels.

As described above, double-tone printing is performed on the basis of the image GS1 (31-5) produced through the color-by-color shift processing and the image GS2 (31-6) produced through the shift processing for double-tone printing. Thus, as in the case of the second embodiment, even when a white backing is applied or transfer to a polycarbonate sheet or the like is performed, there can be obtained a printed image which is free of printing miss of the white backing or adhesion failure and which is not influenced by the heat accumulated in the thermal head.

However, when the color-by-color shift processing as described above is performed, in some cases, the ink of the color image overprinted second or later does not adhere properly, resulting in occurrence of printing unevenness.
For example, in the case where overprinting is performed in the sequence of cyan (C) - magenta (M) - yellow (Y) - black (K), the ink of magenta (M) or yellow (Y), which is applied on the ink of cyan (C), does not adhere properly, and printing unevenness as shown in FIG. 26 occurs.
This becomes remarkable in the case of a highlight image which is low in gradation value.

In order to prevent such unevenness of overprinting stemming from the shift processing, special shift processing is performed for images of selected colors to be overprinted (step 307).
Here, description is given for a case where the magenta (M) image is overprinted subsequent to the cyan (C) image, and the special shift processing is performed for the image data of magenta (M).

As shown in FIG. 19, for the image data GP_{M} of magenta (M), the control section 9 performs the same shift processing as that for the image data of cyan (C), which is the color to be printed before magenta, to thereby produce the images GO1_{M} and GO2_{M} (31-7), and stores them in the image memory 27 of the storage section 7 of the thermal printer 1.
That is, the control section 9 first shifts the image GP_{M} rightward by 2 pixels, which is equal to the rightward-shift pixel number Lc of cyan (C) to thereby produce the image GI1_{M}. Further, in the shift processing for double-tone printing, the control section 9 shifts the image GP_{M} by L1+L_{C} pixels (7 pixels), which is equal to the rightward-shift pixel number of cyan (C), and by L2 pixels (5 pixels), which is the downward shift pixel number, to thereby produce the image GO2_{M} (FIG. 21).

In the above-description, the shift pixel numbers for the case where the resolution is 600 dpi and the number of lines is 60 lpi are shown as an example. However, the numbers of pixels L1, L_{C}, L_{M}, L_{Y}, and L_{K} for lateral shift and the number of pixels L2 for downward shift vary depending on the resolution of the thermal printer 1 and the number of lines of an image to be printed.

As shown in FIG. 20, in the case of 75 lpi, the rightward-shift pixel number for color-by-color shift is the same as in the case of 60 lpi. However, the shift pixel number for double-tone printing is such that the rightward-shift pixel number L1 = 4 pixels, and the downward-shift pixel number L2 = 4 pixels. Further, in the cases of 100 lpi and 120 lpi, the rightward-shift pixel number for color-by-color shift also changes.
By means of performing the shift processing by use of the shift pixel numbers of the respective conditions shown in FIG. 20, it is possible to produce the image data GS1 (31-5), the image data GS2 (31-6), and the images GO1_{M} and GO2_{M} (31-7).

Further, in the above description, dot-on-dot processing, which is the special shift processing, is performed for the magenta (M) image to be overprinted after the cyan (C) image. However, instead of the magenta (M) image, the dot-on-dot processing may be performed for other color images, for example, the yellow (Y) image (sep 307). Further, the dot-on-dot processing may be performed for both of the magenta (M) image and the yellow (Y) image.
Moreover, in the above description, the overprinting is performed in the sequence of cyan (C) - magenta (M) - yellow (Y) - black (K), which is considered to be optimal. However, the sequence is not limited thereto. In such a case, the dot-on-dot processing (step 307) is performed for the image data of a color to be printed second or later.

After the image shift processing, the control section 9 of the thermal printer 1 performs dot processing for the image GS1 (31-5), the data of respective colors of the image GS2 (31-6), and the images GO1_{M} and GO2_{M} (31-7) to thereby produce the image GS1D (31-8), an image GS2D (31-9), and images GO1D_{M} and GO2D_{M} (31-10) (step 308), and stores them in the image memory 27 of the storage section 7 of the thermal printer 1.
The image GS1D (31-8) is composed of four image data sets; i.e., cyan image data GS1D_{C}, magenta image data GS1D_{M}, yellow image data GS1D_{Y}, and black image data GS1D_{K}. The image GS2D (31-9) is composed of four image data sets; i.e., cyan image data GS2D_{C}, magenta image data GS2D_{M}, yellow image data GS2D_{Y}, and black image data GS2D_{K}.

The matrix size of each dot varies depending on the resolution of the thermal printer 1 and the number of lines. As shown in FIG. 20, when the resolution of the thermal printer 1 is 600 dpi, the matrix size is 10 x 10 pixels for the case where the number of lines is 60 lpi, 8 x 8 pixels for the case where the number of lines is 75 lpi, 6 x 6 pixels for the case where the number of lines is 100 lpi, and 5 x 5 pixels for the case where the number of lines is 120 lpi.

Next, the control section 9 of the thermal printer 1 performs reverse shift processing for each dot image (step 309). That is, the control section 9 performs reverse shift processing for the image GS1D (31-8), the image GS2D (31-9), and the images GO1D_{M} and GO2D_{M} (31-10) to thereby produce the image SG1R (31-11), an image SG2R (31-12), and images GO1R_{M} and GO2R_{M} (31-13), and stores them in the image memory 27 of the storage section 7 of the thermal printer 1.

Since the image GS1D (31-8), the image GS2D (31-9), and the images GO1D_{M} and GO2D_{M} (31-10) have undergone the shift processing and the dot processing, through performance of the reverse shift processing, these images are moved to the correct positions.
The image GS1R (31-11) is composed of four image data sets; i.e., cyan image data GS1R_{C}, magenta image data GS1R_{M}, yellow image data GS1R_{Y}, and black image data GS1R_{K}. The image GS2R (31-12) is composed of four image data sets; i.e., cyan image data GS2R_{C}, magenta image data GS2R_{M}, yellow image data GS2R_{Y}, and black image data GS2R_{K}.

In the image reverse shift processing, each image (data) is shifted by the same number of pixels as in the image shift processing of steps 306 and 307 but in the direction opposite that in the image shift processing of steps 306 and 307.
That is, the image GS1D (31-8) is shifted leftward by the rightward-shift pixel numbers (L_{Y}, L_{M}, L_{C}, L_{K}) determined for the respective colors shown in FIG. 20, whereby the image GS1R (31-11) is produced. In the case of 60 lpi, the yellow (Y) image is shifted leftward by one pixel, the cyan (C) image is shifted leftward by two pixels, and the black (K) image is shifted leftward by three pixels. The reverse shift processing is not performed for the magenta (M) image, because L_{M} = 0.

Meanwhile, the image GS2D (31-9) is shifted leftward by the rightward-shift pixel numbers (L1+L_{Y}, L1+L_{M}, L1+L_{C}, L1+L_{K}) for color-by-color shifting and double-tone printing shown in FIG. 20, and is further shifted upward by the downward-shift pixel number L2, whereby the image GS2R (31-12) is produced. In the case of 60 lpi, the yellow (Y) image is shifted leftward by (5+1) pixels; i.e., 6 pixels, and upward by 5 pixels. The magenta (M) image is shifted leftward by (5+0) pixels; i.e., 5 pixels, and upward by 5 pixels. The cyan (C) image is shifted leftward by (5+2) pixels; i.e., 7 pixels, and upward by 5 pixels. The black (K) image is shifted leftward by (5+3) pixels; i.e., 8 pixels, and upward by 5 pixels.

Further, the images GO1D_{M} and the image GO2D_{M} (31-10) are shifted by the same number of pixels as that employed in the shifting effected by the special shift processing in step 307 but in the direction opposite that of the shifting effected by the special shift processing.
That is, the reverse shift processing is performed by use of the shift pixel numbers (L1, L_{C}, L2) of the cyan (C) image which is first printed. In the case of 60 lpi, the image GO1D_{M} is shifted leftward by (L_{C} =) 2 pixels, and the image GO2D_{M} is shifted leftward by (L1+L_{C} =) 7 pixels and upward by (L2 =) 5 pixels, whereby the images GO1R_{M} and GO2R_{M} (31-13) are produced.

Through the processing of step 309, calculation of the image GS1R (31-11), the image GS2R (31-12), and the images GO1R_{M} and GO2R_{M} (31-13), which are data used for double-tone printing, is completed. After that, the image GS1R (31-11) and the image GO1R_{M} are combined, and the image GS2R (31-12) and the image GO2R_{M} are combined, whereby image data for double-tone printing are finally obtained.
Next, a method for combining these images will be described.

First, a highlight region which is low in gradation value is extracted from an image to be printed (step 310).
As shown FIG. 22, on the basis of the image data GR (31-2) after having undergone the resolution conversion processing, a highlight region 73 which is low in gradation value is determined, and the remaining region is referred to as a shadow portion 71.

At that time, in order to determine a highlight region, there can be employed a method of determining, as a highlight region, a region in which the gradation value of magenta (M) is 40% or less, or a method of determining, as a highlight region, a region in which the gradation value of magenta (M) is 40% or less and the gradation value of cyan (C) is 40% or greater.

For the highlight region extracted in the above-described manner, the color image data sets of the image GS1R (31-11) and the image GS2R (31-12), the image data sets having undergone the dot-on-dot processing in step 307, are replaced with the images GO1R_{M} and GO2R_{M} (31-13), whereby GF1 (31-14) and GF2 (31-15) are produced, and are stored in the image memory 27 of the storage section 7 of the thermal printer 1 (step 311) .

That is, as described in the above example processing, when the dot-on-dot processing is performed for magenta (M), the data GS1R_{M} of the image GS1R (31-11) is replaced with the image data GO1R_{M} only in the highlight region, and the data GS2R_{M} of the image GS2R (31-12) is replaced with the image GO2R_{M} only in the highlight region.

The right-hand drawing of FIG. 22 is an explanatory illustration showing the case where the data of the highlight region of the image GS1R (31-11) is replaced with the image GO1R_{M}.
In order to produce the magenta (M) image data GF1_{M} of the image GF1, GO1R_{M} is employed for the highlight region 73, and GS1R_{M}, which is the magenta (M) data of the GS1R (31-11) is employed for the remaining shadow region 71.
Similar processing is performed for the image GS2R (31-12) and the image data GO2R_{M}, whereby an image GF2 (31-15) is obtained.

The control section 9 of the thermal printer 1 ends the step of the image processing 23 and sends the images GF1 (31-14) and GF2 (31-15) to the printing section 11 as double-tone image data (step 312).

In accordance with an instruction from the control section 9, the printing section 11 prints and outputs the images GF1 (31-14) and GF2 (31-15) as the output image 15 (step 313). Double tone printing is performed, and overprinting is carried out with shift processing and special sift processing (dot-on-dot processing) performed in a highlight region. Therefore, it becomes possible to obtain a smooth halftone image which is free of blurring due to heat accumulation of the thermal head, which is free of printing unevenness in a highlight region, and which is stable and does not provide the sensation of roughness, while preventing printing miss of a white backing or adhesion failure, which would occur when the white backing is applied or when printed images and the backing are transferred to the polycarbonate sheet or the like.

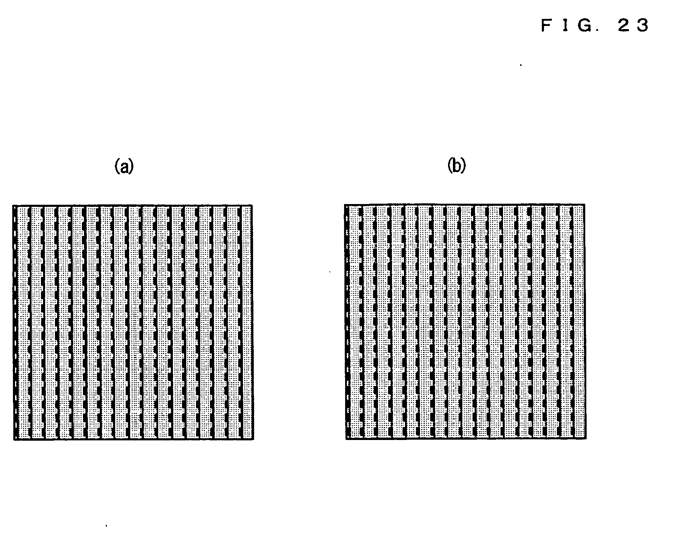

FIG. 23 is an illustrations showing an example image double-tone printed by the method of the present embodiment (in actuality, the image is a color printed image; however, the image is shown in monochrome in FIG. 23).
FIG. 23(a) shows an example printed image of a highlight portion in which a magenta (M) image is printed on a cyan (C) image after having undergone the dot-on-dot processing. The magenta (M) image is printed stably without printing unevenness.
Meanwhile, FIG. 23(b) shows an example printed image of a portion (an intermediate to shadow portion) which is high in gradation value in which the ordinary shift processing is performed for the magenta (M) image as well. The printing miss of a white backing and adhesion failure are mitigated, and thus, good printing quality is attained.

Preferred embodiments of the thermal recording apparatus according to the present invention have been described with reference to the accompanying drawings. However, the present invention is not limited to the above-described embodiments. It is clear that a person with ordinary skill in the art can easily conceive various modifications and changes within the technical idea described in the claims, and it is contemplated that such modifications and changes naturally fall within the technical scope of the present invention.

### INDUSTRIAL APPLICABILITY

The thermal recording apparatus, etc., according to the present invention can be used in the field of high quality image printing and the field of printing involving transfer of inks from an intermediate film to a polycarbonate sheet or the like.

## Claims

1. A thermal recording apparatus including a thermal head, comprising:
pre-processing means for performing, on first image data, resolution conversion, gradation conversion which reduces gradation values by a fixed percentage, and color separation to cyan, magenta, yellow, and black image data sets (31-1 to 31-3) to thereby produce second image data (31-4);
shift means for copying the second image data (31-4) to obtain third image data (31-5) and shifting at least one of the cyan, magenta, yellow, and black image data sets of the second image data (31-4) by a predetermined number of pixels to thereby produce fourth image data (31-6);
dot conversion means for performing halftone processing dot conversion for the third image data (31-5) and the fourth image data (31-6) to thereby produce fifth image data (31-7) and sixth image data (31-8);
reverse shift means for reversely shifting the shifted image data set or sets of the sixth image data (31-8) to thereby produce seventh image data (31-9); and
printing means (11) for printing the fifth image data (31-7) and the seventh image data (31-9) in a superposed state to obtain a printed object by double-tone printing.

2. The apparatus of claim 1, wherein each of the second image data (31-4), the third image data (31-5), the fourth image data (31-6), the fifth image data (31-7), the sixth image data (31-8), and the seventh image data (31-9) include image data for each of cyan (C), magenta (M), yellow (Y), and black (K), which are obtained through the color separation.

3. The apparatus of claim 1, wherein the shift means is configured to shift the second image data (31-4) not for all of the image colors.

4. The apparatus of claim 3, wherein the shift processing is not performed for black (K) or/and yellow (Y).

5. The apparatus of claim 3, further comprising:
dot-on-dot processing means for performing, for at least one type of color image data of the second image data (31-4) to be printed second or later, the same shift processing as that performed for another type of color image data to be printed before the at least one type of color image data, to thereby produce eighth image data and ninth image data;
means for performing dot conversion processing and reverse shift processing for the eighth image data and the ninth image data to thereby produce tenth image data and eleventh image data;
highlight region extraction means for extracting a highlight region of the first image data (31-1 to 31-3); and
combining means for combining the image data, wherein the combining means is adapted to apply the ninth image data and the tenth image data to respective portions of at least one type of color image data of the fifth image data (31-7) and the seventh image data (31-9) to be printed second or later, the portions corresponding to a region recognized by the highlight region extraction means as a highlight portion.

6. The apparatus of claim 5, wherein when the printing is performed in the sequence of cyan (C), magenta (M), yellow (Y), and black (K), the dot-on-dot processing is performed such that at least the color image data of magenta (M) to be printed second or later undergo the same shift processing as that for the color image data of cyan (C) to be printed before the color image data of magenta (M).

7. The apparatus of claim 5, wherein the highlight region extraction means is adapted to extract, as a highlight region, a region whose gradation value is lower than a predetermined value.

8. The apparatus of claim 7, wherein the highlight region is a region where the gradation value of the color image data of magenta (M) is 40% or less.

9. The apparatus of claim 5, wherein the highlight region extraction means is adapted to extract, as a highlight region, a region where the gradation value of first color image data to be printed second or later is lower than a predetermined value, and the gradation value of second color image data to be printed before the first color image data is higher than a predetermined value.

10. The apparatus of claim 9, wherein the highlight region is a region where the gradation value of the color image data of magenta (M) is 40% or less, and the gradation value of the color image data of cyan (C) is 40% or greater.

11. An image forming method comprising the steps of:
performing (103 to 105), on first image data, resolution conversion, gradation conversion which reduces gradation values by a fixed percentage, and color separation to cyan, magenta, yellow, and black image data sets (31-1 to 31-3) to thereby produce second image data (31-4);
copying the second image data (31-4) to obtain third image data (31-5) and shifting (106) at least one of the cyan, magenta, yellow, and black image data sets of the second image data (31-4) by a predetermined number of pixels to thereby produce fourth image data (31-6);
performing (107) halftone processing dot conversion for the third image data (31-5) and the fourth image data (31-6) to thereby produce fifth image data (31-7) and sixth image data (31-8);
reversely shifting (108) the shifted image data set or sets of the sixth image data (31-8) to thereby produce seventh image data (31-9); and
printing (110) the fifth image data (31-7) and the seventh image data (31-9) in a superposed state to obtain a printed object by double-tone printing.

12. The method of claim 11, wherein each of the second image data (31-4), the third image data (31-5), the fourth image data (31-6), the fifth image data (31-7), the sixth image data (31-8), and the seventh image data (31-9) include image data for each of cyan (C), magenta (M), yellow (Y), and black (K), which are obtained through the color separation.

## Patentansprüche

1. Thermisches Aufzeichnungsgerät mit einem Thermokopf, umfassend:
eine Vorverarbeitungseinrichtung, zum Durchführen einer Auflösungsumwandlung, einer Gradationsumwandlung, die Gradationswerte um einen festen Prozentsatz reduziert, und einer Farbtrennung in Bilddatenreihen (31-1 bis 31-3) in den Farben Zyan, Magenta, Gelb und Schwarz an ersten Bilddaten, um dadurch zweite Bilddaten (31-4) zu erzeugen;
eine Verschiebeeinrichtung zum Kopieren der zweiten Bilddaten (31-4), um dadurch dritte Bilddaten (31-5) zu erhalten und zum Verschieben wenigstens einer der Bilddatenreihen der zweiten Bilddaten (31-4) in den Farben Zyan, Magenta, Gelb und Schwarz, um eine vorbestimmte Anzahl von Pixeln, um dadurch vierte Bilddaten (31-6) zu erzeugen;
eine Punktumwandlungseinrichtung zum Durchführen einer Halbtonverarbeitungs-Punktumwandlung an den dritten Bilddaten (31-5) und den vierten Bilddaten (31-6), um dadurch fünfte Bilddaten (31-7) und sechste Bilddaten (31-8) zu erzeugen;
eine Umkehrverschiebeeinrichtung zum umgekehrten Verschieben der verschobenen Bilddatenreihe oder -reihen der sechsten Bilddaten (31-8), um dadurch siebte Bilddaten (31-9) zu erzeugen; und
eine Druckeinrichtung (11) zum Drucken der fünften Bilddaten (31-7) und der siebten Bilddaten (31-9) in einem überlagerten Zustand, um dadurch ein gedrucktes Objekt durch Doppeltondrucken zu erhalten.

2. Gerät nach Anspruch 1, wobei die zweiten Bilddaten (31-4), die dritten Bilddaten (31-5), die vierten Bilddaten (31-6), die fünften Bilddaten (31-7), die sechsten Bilddaten (31-8) und die siebten Bilddaten (31-9) jeweils Bilddaten für jede der Farben Zyan (C), Magenta (M), Gelb (Y) und Schwarz (K) aufweisen, die durch die Farbtrennung erhalten wurden.

3. Gerät nach Anspruch 1, wobei die Verschiebeeinrichtung dazu ausgelegt ist, die zweiten Bilddaten (31-4) nicht für alle Bildfarben zu verschieben.

4. Gerät nach Anspruch 3, wobei die Verschiebeverarbeitung nicht für Schwarz (K) oder/und Gelb (Y) durchgeführt wird.

5. Gerät nach Anspruch 3, ferner mit:
einer Punkt-an-Punkt-Verarbeitungseinrichtung, um wenigstens für einen Typ von Farbbilddaten der zweiten Bilddaten (31-4), die als zweites oder später zu drucken sind, die gleiche Verschiebeverarbeitung durchzuführen, wie sie für einen anderen Typ von Farbbilddaten durchgeführt wird, die vor dem wenigstens einen Typ von Farbbilddaten zu drucken ist, um dadurch achte Bilddaten und neunte Bilddaten zu erzeugen;
einer Einrichtung zum Durchführen einer Punktumwandlungsverarbeitung und Umkehrverschiebeverarbeitung für die achten Bilddaten und die neunten Bilddaten, um dadurch zehnte Bilddaten und elfte Bilddaten zu erzeugen;
einer Einrichtung zur Extraktion einer hervorgehobenen Region der ersten Bilddaten (31-1 bis 31-3); und
einer Kombinationseinrichtung zum Kombinieren der Bilddaten, wobei die Kombinationseinrichtung dazu ausgelegt ist, die neunten Bilddaten und die zehnten Bilddaten auf entsprechende Abschnitte wenigstens eines Typs von Farbbilddaten der fünften Bilddaten (31-7) und der siebten Bilddaten (31-9) anzuwenden, die als zweites oder später zu drucken sind, wobei die Abschnitte einer Region entsprechen, die durch die Einrichtung zur Extraktion der hervorgehobenen Region als ein hervorgehobener Abschnitt erkannt werden.

6. Gerät nach Anspruch 5, wobei bei Durchführung des Druckens in der Reihenfolge Zyan (C), Magenta (M), Gelb (Y) und Schwarz (K) die Punkt-an-Punkt-Verarbeitung so durchgeführt wird, dass wenigstens die Farbbilddaten von Magenta (M), die als zweites oder später zu drucken sind, der gleichen Verschiebeverarbeitung unterzogen werden wie die für die Farbbilddaten von Zyan (C), das vor den Farbbilddaten von Magenta (M) zu drucken ist.

7. Gerät nach Anspruch 5, wobei die Einrichtung zur Extraktion der hervorgehobenen Region dazu ausgelegt ist, eine Region, deren Gradationswert niedriger als ein vorbestimmter Wert ist, als eine hervorgehobene Region zu extrahieren.

8. Gerät nach Anspruch 7, wobei die hervorgehobene Region eine Region ist, in der der Gradationswert der Farbbilddaten von Magenta (M) höchstens 40% beträgt.

9. Gerät nach Anspruch 5, wobei die Einrichtung zur Extraktion der hervorgehobenen Region dazu ausgelegt ist, eine Region als eine hervorgehobene Region zu extrahieren, in der der Gradationswert von ersten Farbbilddaten, die als zweites oder später zu drucken sind, niedriger ist als ein vorbestimmter Wert, und der Gradationswert der zweiten Farbbilddaten, die vor den ersten Farbbilddaten zu drucken sind, höher als ein vorbestimmter Wert ist.

10. Gerät nach Anspruch 9, wobei die hervorgehobene Region eine Region ist, in der der Gradationswert der Farbbilddaten von Magenta (M) höchstens 40% und der Gradationswert der Farbbilddaten von Zyan (C) mindestens 40% beträgt.

11. Bildformungsverfahren mit den folgenden Schritten:
Durchführen (103 bis 105) einer Auflösungsumwandlung, einer Gradationsumwandlung, die Gradationswerte um einen festen Prozentsatz reduziert, und einer Farbtrennung in Bilddatenreihen (31-1 bis 31-3) in den Farben Zyan, Magenta, Gelb und Schwarz an ersten Bilddaten, um dadurch zweite Bilddaten (31-4) zu erzeugen;
Kopieren der zweiten Bilddaten (31-4), um dadurch dritte Bilddaten (31-5) zu erhalten, und Verschieben (106) wenigstens einer der Bilddatenreihen der zweiten Bilddaten (31-4) in den Farben Zyan, Magenta, Gelb und Schwarz, um eine vorbestimmte Anzahl von Pixeln, um dadurch vierte Bilddaten (31-6) zu erzeugen;
Durchführen (107) einer Halbtonverarbeitungs-Punktumwandlung an den dritten Bilddaten (31-5) und den vierten Bilddaten (31-6), um dadurch fünfte Bilddaten (31-7) und sechste Bilddaten (31-8) zu erzeugen;
umgekehrtes Verschieben (108) der verschobenen Bilddatenreihe oder - reihen der sechsten Bilddaten (31-8), um dadurch siebte Bilddaten (31-9) zu erzeugen; und
Drucken (110) der fünften Bilddaten (31-7) und der siebten Bilddaten (31-9) in einem überlagerten Zustand, um dadurch ein gedrucktes Objekt durch Doppeltondrucken zu erhalten.

12. Verfahren nach Anspruch 11, wobei die zweiten Bilddaten (31-4), die dritten Bilddaten (31-5), die vierten Bilddaten (31-6), die fünften Bilddaten (31-7), die sechsten Bilddaten (31-8) und die siebten Bilddaten (31-9) jeweils Bilddaten für jede der Farben Zyan (C), Magenta (M), Gelb (Y) und Schwarz (K) aufweisen, die durch die Farbtrennung erhalten wurden.

## Revendications

1. Dispositif d'enregistrement thermique incluant une tête thermique, comportant :
des moyens de pré-traitement pour exécuter, sur des premières données d'images, une conversion de résolution, une conversion de gradation qui réduit des valeurs de gradation d'un pourcentage fixe, et une séparation des couleurs en ensembles de données d'images de couleurs cyan, magenta, jaune et noire (31-1 à 31-3) de manière à produire des deuxièmes données d'images (31-4),
des moyens de décalage pour copier les deuxièmes données d'images (31-4) afin d'obtenir des troisièmes données d'images (31-5) et décaler au moins l'un des ensembles de données d'images de couleurs cyan, magenta, jaune et noire des deuxièmes données d'images (31-4) d'un nombre prédéterminé de pixels de manière à produire des quatrième données d'images (31-6),
des moyens de conversion de points pour exécuter une conversion de points par traitement tramé pour les troisièmes données d'images (31-5) et les quatrièmes données d'images (31-6) de manière à produire des cinquièmes données d'images (31-7) et des sixièmes données d'images (31-8),
des moyens de décalage inverse pour décaler de manière inverse l'ensemble ou les ensembles de données d'images décalés des sixièmes données d'images (31-8) de manière à produire des septièmes données d'images (31-9), et
des moyens d'impression (11) pour imprimer les cinquièmes données d'images (31-7) et les septièmes données d'images (31-9) dans un état superposé afin d'obtenir un objet imprimé par impression double-ton.

2. Dispositif selon la revendication 1, dans lequel chacune des deuxièmes données d'images (31-4), des troisièmes données d'images (31-5), des quatrièmes données d'images (31-6), des cinquièmes données d'images (31-7), des sixièmes données d'images (31-8), et des septièmes données d'images (31-9) incluent des données d'images pour chacune des couleurs cyan (C), magenta (M), jaune (Y), et noire (K), lesquelles sont obtenues via la séparation des couleurs.

3. Dispositif selon la revendication 1, dans lequel les moyens de décalage sont configurés pour décaler les deuxièmes données d'images (31-4) pour certaines mais pas la totalité des couleurs d'images.

4. Dispositif selon la revendication 3, dans lequel le traitement de décalage n'est pas exécuté pour le noir (K) ou/et le jaune (Y) .

5. Dispositif selon la revendication 3, comportant en outre :
des moyens de traitement point sur point pour exécuter, pour au moins un type de données d'images de couleur des deuxièmes données d'images (31-4) à imprimer en deuxième ou plus tard, le même traitement de décalage que celui exécuté pour un autre type de données d'images de couleur à imprimer avant le au moins un type de données d'images de couleur, de manière à produire des huitièmes données d'images et des neuvièmes données d'images,
des moyens pour exécuter un traitement de conversion de points et un traitement de décalage inverse pour les huitièmes données d'images et les neuvièmes données d'images de manière à produire des dixièmes données d'images et des onzièmes données d'images,
des moyens d'extraction de région mise en évidence pour extraire une région mise en évidence des premières données d'images (31-1 à 31-3), et
des moyens de combinaison pour combiner les données d'images, dans lequel les moyens de combinaison sont adaptés pour appliquer les neuvième données d'images et les dixième données d'images à des parties respectives d'au moins un type de données d'images de couleur des cinquièmes données d'images (31-7) et des septièmes données d'images (31-9) à imprimer en deuxième ou plus tard, les parties correspondant à une région reconnue par les moyens d'extraction de région mise en évidence en tant que partie mise en évidence.

6. Dispositif selon la revendication 5, dans lequel, lorsque l'impression est exécutée dans la séquence de cyan (C), magenta (M), jaune (Y) et noire (K), le traitement de point sur point est exécuté de sorte qu'au moins les données d'images de couleur de magenta (M) à imprimer en deuxième ou plus tard sont soumises au même traitement de décalage que celui appliqué aux données d'images de couleur de cyan (C) à imprimer avant les données d'images de couleur de magenta (M).

7. Dispositif selon la revendication 5, dans lequel les moyens d'extraction de région mise en évidence sont adaptés pour extraire, en tant que région mise en évidence, une région dont la valeur de gradation est inférieure à une valeur prédéterminée.

8. Dispositif selon la revendication 7, dans lequel la région mise en évidence est une région dans laquelle la valeur de gradation des données d'images de couleur de magenta (M) est de 40 % ou inférieure.

9. Dispositif selon la revendication 5, dans lequel les moyens d'extraction de région mise en évidence sont adaptés pour extraire, en tant que région mise en évidence, une région dans laquelle la valeur de gradation des premières données d'images de couleur à imprimer en deuxième ou plus tard est inférieure à une valeur prédéterminée, et la valeur de gradation des deuxièmes données d'images de couleur à imprimer avant les premières données d'images de couleur est supérieure à une valeur prédéterminée.

10. Dispositif selon la revendication 9, dans lequel la région mise en évidence est une région dans laquelle la valeur de gradation des données d'images de couleur de magenta (M) est de 40 % ou inférieure, et la valeur de gradation des données d'images de couleur de cyan (C) est de 40 % ou supérieure.

11. Procédé de formation d'images comportant les étapes consistant à :
exécuter (103 à 105), sur des premières données d'images, une conversion de résolution, une conversion de gradation qui réduit des valeurs de gradation d'un pourcentage fixe, et une séparation de couleurs en ensembles de données d'images de couleurs cyan, magenta, jaune et noire (31-1 à 31-3) de manière à produire des deuxièmes données d'images (31-4),
copier les deuxièmes données d'images (31-4) afin d'obtenir des troisièmes données d'images (31-5) et décaler (106) au moins l'un des ensembles de données d'images de couleurs cyan, magenta, jaune et noirs des deuxièmes données d'images (31-4) d'un nombre prédéterminé de pixels de manière à produire des quatrièmes données d'images (31-6),
exécuter (107) une conversion de points par traitement tramé pour les troisièmes données d'images (31-5) et les quatrièmes données d'images (31-6) de manière à produire des cinquièmes données d'images (31-7) et des sixièmes données d'images (31-8),
décaler de manière inverse (108) l'ensemble ou les ensembles de données d'images décalées des sixièmes données d'images (31-8) de manière à produire des septièmes données d'images (31-9), et
imprimer (110) les cinquièmes données d'images (31-7) et les septièmes données d'images (31-9) dans un état superposé afin d'obtenir un objet imprimé par impression double-ton.

12. Procédé selon la revendication 11, dans lequel chacune des deuxièmes données d'images (31-4), des troisièmes données d'images (31-5), des quatrièmes données d'images (31-6), des cinquièmes données d'images (31-7), des sixièmes données d'images (31-8), et des septièmes données d'images (31-9) incluent des données d'images pour chacune des couleurs cyan (C), magenta (M), jaune (Y), et noire (K), lesquelles sont obtenues via la séparation des couleurs.
